(19) Europäisches Patentamt
European Patent Office
Office européen des brevets

(11) **EP 1 887 316 B1**

(12) **FASCICULE DE BREVET EUROPEEN**

(45) Date de publication et mention
de la délivrance du brevet:
**15.08.2012 Bulletin 2012/33**

(51) Int Cl.:
**G01B 11/16** *(2006.01)*

(21) Numéro de dépôt: **07113495.1**

(22) Date de dépôt: **31.07.2007**

(54) **Dispositif de mesure des déformations d'un profile soumis à un ou plusieurs efforts**

Device for the measurement of deformations of a profile subject to one or more forces

Device for the measurement of deformations of a profile subject to one or more forces

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **01.08.2006 FR 0607023**

(43) Date de publication de la demande:
**13.02.2008 Bulletin 2008/07**

(73) Titulaire: **Commissariat à l'Énergie Atomique
et aux Énergies Alternatives
75015 Paris (FR)**

(72) Inventeur: **Maurin, Laurent
91400, ORSAY (FR)**

(74) Mandataire: **Texier, Christian et al
Cabinet Regimbeau
20, rue de Chazelles
75847 Paris Cedex 17 (FR)**

(56) Documents cités:
**EP-A- 1 496 369        EP-A- 1 635 034
DE-A1- 19 724 528      DE-A1- 19 922 102
GB-A- 2 400 171**

EP 1 887 316 B1

## Description

La présente invention est relative à un dispositif et un procédé de mesure des déformations d'un profilé soumis à un ou plusieurs efforts.

L'invention propose un dispositif de mesure des déformations en flexion et en traction / compression d'un profilé.

Elle trouve son application pour la mesure des déformations générées sur une ligne de contact (caténaire) par un pantographe lors du passage d'un train.

## ART ANTERIEUR

Les capteurs à base de réseaux de Bragg inscrits dans des fibres optiques sont utilisés couramment pour des mesures précises de déformations de structures, une variation de longueur d'un réseau de Bragg produisant une variation de la longueur d'onde de Bragg, qui peut être calibrée. De tels capteurs à fibre optique sont particulièrement intéressants en milieu à fortes contraintes (forts champs électriques par exemple), du fait de leur insensibilité aux rayonnements électromagnétiques ambiants.

De nombreux extensomètres (dans lesquels un réseau de Bragg est monté sur un support avec une pré-tension initiale) sont basés sur ce principe. Cependant, la mesure des déformations n'est pas une mesure directe, et ne permet donc pas d'identifier et de séparer différents effets pouvant s'additionner pour produire un allongement (respectivement un raccourcissement) d'un réseau de Bragg.

Il existe des dispositifs de mesure à base de réseaux de Bragg capables de mesurer une traction pure ou une flexion pure.

Dans des structures rigides ou semi-rigides de fort diamètre (par exemple une canalisation pipeline [Magne and Ferdinand, 2005]), il est parfois possible de faire l'hypothèse simplificatrice que la position de la fibre neutre reste inchangée, et donc de négliger les erreurs dues à l'influence d'une flexion ayant entre autres pour effet de déplacer, d'une valeur relativement faible par rapport aux diamètres en jeu dans telles structures, la position de cette fibre neutre. Dans le cas où le système à contrôler présente uniquement des efforts de traction il est possible d'extraire simplement la composante de traction.

La plupart des extensomètres à réseaux de Bragg, dans lesquels le réseau de Bragg est tendu entre deux points, ne permettent pas une mesure directe de flexion entre ces deux points, car le réseau de Bragg se comporte alors comme la corde d'un arc et intègre sans les dissocier, à la fois les déformations de flexion et de traction / compression. Il existe des dispositifs dans lesquels le réseau de Bragg est collé au support déformable sur toute sa longueur. La mesure intègre ainsi la totalité de la déformation du support. De tels dispositifs peuvent s'utiliser pour mesurer la flexion du matériau support [Rougeault, 2004], dans l'hypothèse, non toujours réaliste, que toute autre déformation en traction / compression reste négligeable.

Ainsi, lorsque plusieurs composantes de déformations s'additionnent (notamment flexion et traction d'une même structure déformable), il est jusqu'à présent impossible de séparer et de quantifier chacune de ces contributions à partir d'une mesure de variation de longueur d'un réseau de Bragg.

Or, dans le cas de lignes de contact d'alimentation électrique pour les trains, il n'est pas possible d'émettre l'hypothèse que la traction induite exercée sur ces lignes par un train avec son pantographe au contact, est systématiquement négligeable par rapport à la flexion qu'elles subissent. Par ailleurs, cette mesure de flexion est particulièrement difficile à évaluer pour ce type d'application : non seulement les déformations de flexion sont faibles et du même ordre de grandeur que les déformations de traction, mais de plus leurs valeurs restent proches de la limite de résolution des appareils de mesure actuels (de l'ordre du micromètre par mètre [$\mu$m/m]), ce qui ne permet pas de les isoler et de les mesurer aisément.

On connaît déjà, notamment par le document EP 1 496 369 [Bosselmann et al., 2004], un dispositif optique pour surveiller une ligne de contact, qui comprend au niveau des zones dont on veut mesurer les déformations, des fibres optiques à réseaux de Bragg s'étendant le long de la ligné de contact.

Dans les différentes variantes envisagées dans ce document, les fibres optiques à réseaux de Bragg s'étendent à proximité immédiate de la ligne de contact.

Il en résulte une sensibilité de mesure très insuffisante par rapport aux meilleures performances des autres systèmes actuels. En effet, les points de mesure de la déformation, en particulier concernant la mesure de la flexion, sont très proches de la "fibre neutre" de la ligne de contact. Le niveau maximal de déformation est donc très faible : de l'ordre du $\mu$m/m, alors que cette valeur est typique des meilleures résolutions actuellement atteignables.

En outre, la solution décrite dans ce document ne permet pas de dissocier les déformations de traction des déformations de flexion, puisqu'il n'est pas possible de faire l'hypothèse que l'une ou l'autre de ces déformations est négligeable. Le résultat de la mesure de ces déformations est donc une mesure dont la signification exacte est difficile à établir.

Par ailleurs, la difficulté de connaître de façon précise la position de la fibre neutre est à l'origine d'une erreur de mesure significative par rapport à l'étendue des déformations subies par le fil de caténaire. En effet, toute variation ou toute incertitude sur la position de la fibre neutre introduit une erreur systématique sur la mesure des déformations.

On notera également que le dispositif décrit dans ce document impose de rajouter à la ligne caténaire, sur une certaine longueur de celle-ci, un élément qui est d'une section significative par rapport au fil de contact et qui ajoute à la rigidité de l'ensemble, ce qui ne manque pas de perturber la mesure.

Enfin, la solution proposée dans cette demande de brevet EP 1 496 369 ne permet en aucune façon de positionner angulairement dans l'espace la direction des efforts appliqués sur le fil de contact par le pantographe, le nombre de points de mesure étant en effet insuffisant. Or, cette position angulaire est importante pour quantifier l'importance relative des efforts verticaux et horizontaux exercés sur la ligne de contact par un pantographe.

D'autres dispositifs de mesure optique sur un profilé ont encore été proposés.

Par exemple, la demande de brevet WO 2005/088375 [Magne and Ferdinand, 2005] décrit un dispositif de mesure de la traction sur un pipeline qui utilise également des fibres optiques à réseaux de Bragg.

EP 1 635 034 concerne également l'application pipeline, dans lequel les fibres optiques à réseaux de bragg sont agencées pour pouvoir permettre des mesures de déformation de traction et/ou de flexion. Le préambule de la présente revendication 1 se base sur ce document

Là encore, les fibres optiques sont en contact immédiat avec le dispositif à mesurer ce qui, à l'instar de ce qui a été exposé plus haut s'agissant de la demande de brevet EP 1 496 369, ne permet pas une mesure satisfaisante dans le cas d'un profilé de petit diamètre, comme c'est le cas pour une ligne de contact.

En outre, la technique proposée dans ce document ne permet pas de distinguer les déformations de flexion des déformations de traction.

## PRESENTATION DE L'INVENTION

Un objet de l'invention est de proposer un dispositif de mesure sensible à des efforts de flexion et / ou de traction / compression dans un profilé, le profilé étant préférentiellement mais non limitativement une ligne de contact pour alimentation d'un train électrique.

Un autre objet de l'invention est un procédé de traitement des mesures effectuées permettant d'extraire de ces mesures une évaluation de l'amplitude des composantes en flexion et / ou en traction / compression, et une indication de la direction angulaire d'application des efforts sur le profilé dans un plan perpendiculaire à son axe longitudinal.

L'invention propose un dispositif de mesure de déformations mécaniques de flexion et de traction/compression d'un profilé soumis à un ou plusieurs efforts, comprenant au moins trois capteurs à fibre optique à réseaux de Bragg, lesdits capteurs s'étendant parallèlement à l'axe longitudinal du profilé dans un plan $(P_k)_{(k \geq 0)}$ et entre deux supports accrochés en deux points du profilé au moins deux de ces capteurs étant par ailleurs disposés à des distances distinctes du profilé, et les trois capteurs étant parallèles mais non disposés dans un même plan , caractérisé en ce que, le profilé formant ligne de contact d'alimentation électrique d'un train, les capteurs sont disposés à distance et le plus loin possible du plan de fibre neutre du profilé par l'intermédiaire desdits supports qui s'étendent à partir du profilé.

Un tel dispositif permet en particulier un effet d'amplification intrinsèque et la mesure découplée des déformations engendrées par des efforts combinés de flexion et de traction et ce notamment - mais non limitativement - dans le cas des déformations générées par un pantographe en contact avec une ligne de contact, et ce même lorsque le niveau de déformations moyen reste faible.

## DESCRIPTION DES FIGURES

D'autres caractéristiques et avantages de l'invention ressortiront encore de la description qui suit, laquelle est purement illustrative et doit être lue en regard des dessins annexés sur lesquels :

- la figure 1A est une représentation schématique en vue de face d'un dispositif conforme à un mode de réalisation possible de l'invention,
- les figures 1B et 1C sont des représentations en vue de côté et en vue de dessus du dispositif de la figure 1A,
- la figure 2 illustre un système d'interrogation du dispositif des figures 1A à 1C,
- la figure 3 illustre, en vue de côté, une autre variante possible pour l'invention,
- la figure 4 illustre le comportement schématique d'un profilé en flexion,
- la figure 5 représente les paramètres des déformations en flexion pure dans un plan $(P_0)$ perpendiculaire au plan de fibre neutre,
- les figures 6A et 6B représentent les paramètres intervenant dans l'analyse et la flexion dans des plans de mesure $(P_1)$ et $(P_2)$ quelconques,
- la figure 7 illustre le calcul de la position du centre de courbure local,
- la figure 8 illustre schématiquement l'impact d'une traction additionnelle à une déformation en flexion,

- les figures 9A et 9B illustrent les angles d'orientation et la direction des efforts,
- la figure 10 illustre un synoptique de calcul des valeurs absolues des forces et de la déflexion,
- la figure 11 illustre l'incertitude **2e** du positionnement du plan de fibre neutre d'une ligne de contact,
- la figure 12A est une représentation schématique en vue de face d'un dispositif conforme à un autre mode de réalisation possible de l'invention,
- les figures 12B et 12C sont des représentations en vue de côté et en vue de dessus du dispositif de la figure 12A.

## DESCRIPTION D'UN OU PLUSIEURS MODES DE REALISATION ET DE MISE EN OEUVRE

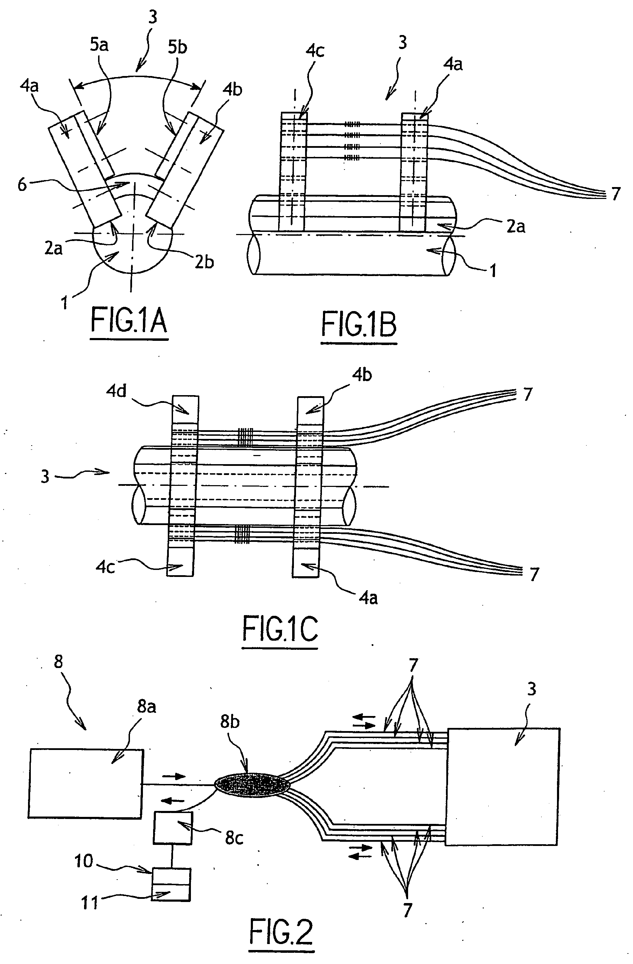

On a représenté sur les figures 1A à 1C une ligne de contact 1, qui est un profilé de section générale cylindrique présentant, de façon connue en soi, deux rainures longitudinales 2a, 2b destinées à recevoir les mâchoires d'un dispositif de fixation (non représenté).

Sur ces rainures 2a, 2b de la ligne de contact 1, sont accrochés un ou plusieurs dispositifs de mesure du type du dispositif 3 représenté sur les figures 1A à 1C. Il peut par exemple être prévu que ces dispositifs soient répartis régulièrement sur toute la longueur de la ligne, chaque tronçon de ligne entre deux dispositifs de fixation successifs étant équipé d'un tel dispositif de mesure 3.

Un tel dispositif 3 comporte quatre bras 4a à 4d qui s'étendent par paire à partir de la ligne de contact 1, et notamment des rainures 2a et 2b, pour former en deux points rapprochés de la ligne deux supports 5a, 5b en V se faisant face. Ces supports en V 5a, 5b s'étendent symétriquement par rapport à un plan vertical passant par la ligne de contact 1. Leurs différents bras 4a à 4d sont reliés entre eux par une armature centrale 6, qui s'étend entre les deux supports 5a, 5b et sont fixés sur la ligne de contact 1 par accrochage sur les rainures 2a et 2b (maintien par serrage assuré par un système de vis et écrous par exemple).

Les deux supports en V 5a, 5b portent une pluralité de fibres optiques 7 qui s'étendent parallèlement à la ligne de contact, entre les bras 4a à 4d qui se font face parallèlement à la direction générale de la ligne de contact. Ces fibres optiques 7 sont des fibres optiques à réseaux de Bragg et sont réparties sur différentes hauteurs des bras 4a à 4d.

Comme l'illustre la figure 2, chaque fibre optique 7 est reliée à un dispositif d'interrogation 8 qui comporte une source 8a pour émettre des impulsions lumineuses vers ces fibres 7 dans une gamme de longueurs d'onde donnée, des moyens de couplage optique 8b pour diriger cette lumière vers les différentes fibres optiques 7, des moyens de détection 8c pour détecter la lumière réfléchie par les réseaux de Bragg des fibres 7 dans la même gamme de longueurs d'onde et des moyens de traitement 10, comprenant notamment des moyens de mémorisation 11, pour déduire des longueurs d'onde de réflexion des différents réseaux de Bragg des informations sur les efforts de flexion et de traction subis par la ligne de contact 1 à l'endroit où se trouve le dispositif 3.

En effet, lorsqu'un pantographe passe sous la ligne de contact 1 celle-ci subit des efforts de déformation, qui sont des efforts combinés de flexion et de traction. Ces efforts déforment la ligne de contact 1 et la position relative des supports 5a, 5b entre eux change. Les élongations des réseaux de Bragg des différentes fibres en sont modifiées, de sorte que la connaissance des longueurs d'onde de Bragg instantanées des différentes fibres optiques permet de déterminer les déformations subies par la ligne de contact.

Le fait de disposer de réseaux de Bragg à distance de la ligne de contact permet d'amplifier la déformation en flexion par rapport à celle subie par la ligne de contact 1 et de disposer ainsi d'une plus grande sensibilité, ce d'autant que le diamètre de la ligne de contact est faible alors qu'une disposition des capteurs à réseaux de Bragg au contact direct avec la ligne 1 n'engendrerait que de faibles déformations.

Plus précisément, la mesure de flexion requiert de positionner un capteur en dehors du plan de fibre neutre, l'élongation du capteur à réseaux de Bragg liée à la flexion étant proportionnelle à la distance entre le capteur à réseaux de Bragg et le plan de fibre neutre de la ligne de contact.

Généralement, le plan de fibre neutre se situe à l'intérieur de la ligne de contact. Toutefois, sa position n'est a priori pas connue avec précision, et ce d'autant plus que la section de la ligne de contact est faible ou non régulière, ce qui est typiquement le cas ici. Il faut aussi prendre en compte le fait que cette section diminue encore par usure lors d'une application à une ligne de contact pour train électrique, diminution qui peut aller jusqu'à 50%. D'où une difficulté pour connaître la distance séparant le capteur du plan de fibre neutre.

Afin d'augmenter la précision de mesure en flexion et de minimiser l'erreur due à une variation (figure 1 B) de position du plan de fibre neutre, le ou chaque capteur à réseaux de Bragg est positionné à distance et le plus loin possible du plan de fibre neutre, et par conséquent le plus loin possible de la ligne de contact 1.

Une telle disposition est contraire à ce qui est effectué dans l'art antérieur, dans lequel les capteurs sont plaqués sur la ligne de contact. Comme le dispositif doit répondre à des contraintes d'encombrement et de poids minimum, la position des capteurs par rapport au plan de fibre neutre est un compromis entre les contraintes de qualité de la mesure et les contraintes d'encombrement.

On pourra se reporter à l'annexe 2 qui définit par exemple avec précision le plan de fibre neutre, ses conditions d'existence, ou encore l'erreur sur son positionnement.

En outre, le fait de disposer, dans un même plan parallèle à la ligne de contact, d'au moins deux réseaux de Bragg situés à des distances distinctes de la ligne de contact permet, ainsi que le détaille le calcul en annexe, de distinguer les déformations de flexion et celles de traction.

On notera de façon générale que si la direction des efforts appliqués sur le profilé est connue, le nombre minimal de réseaux de Bragg est égal à deux ; les fibres qui portent ces réseaux de Bragg sont alors préférentiellement perpendiculaires à la direction d'application des efforts, et s'étendent dans un plan passant par cette direction.

Si par contre la direction d'application des efforts n'est pas connue, il est alors nécessaire d'effectuer la mesure dans deux plans d'orientations différentes. Un minimum de trois réseaux parallèles mais non disposés dans un même plan peut suffire. On préfère toutefois le système symétrique et donc un nombre pair de réseaux de mesures dans le cas où il n'utilise uniquement deux plans, étant entendu qu'une disposition selon un nombre de plans plus important est envisageable.

Bien entendu, pour des raisons de précision de mesure, il est préférable de disposer d'un maximum de réseaux de mesures.

Les réseaux de Bragg sont généralement multiplexés spectralement sur une même ligne de mesure. On notera toutefois qu'un compromis doit être effectué entre la dynamique spectrale mise en oeuvre et la dynamique spectrale de mesure des appareils (dispositif d'interrogation 8) qui reste limitée (typiquement 30 nanomètres pour des appareils de mesure rapide avec une vitesse de balayage supérieure à 100 Hertz; 100 nanomètres et au-delà pour d'autres appareils ayant une vitesse de balayage plus lente). Egalement, on peut prévoir d'enchaîner plusieurs groupes de capteurs, leurs longueurs d'onde de Bragg se retrouvant ainsi sur une même ligne.

Pour toutes ces raisons, la bande spectrale exploitable est susceptible d'être rapidement saturée, les longueurs d'onde de Bragg de chacun des réseaux n'étant pas statiques. On notera en ce cas, qu'il peut alors être souhaitable de se limiter à trois réseaux de Bragg pour la mesure de la direction de courbure.

On notera que l'on fait ici l'hypothèse que les phénomènes à l'origine des déformations du profilé sont suffisamment rapides (de l'ordre de la seconde) pour qu'il n'y ait pas besoin d'ajouter de réseau de compensation thermique (ce qui est le cas dans l'hypothèse du passage d'un train et de la caractérisation des efforts entre un pantographe et la ligne de contact). Si les phénomènes observés sont toutefois à variation lente, on rajoute alors autant de réseaux de Bragg de compensation thermique (chacun isolé des déformations) qu'il y a de mesures de déformations.

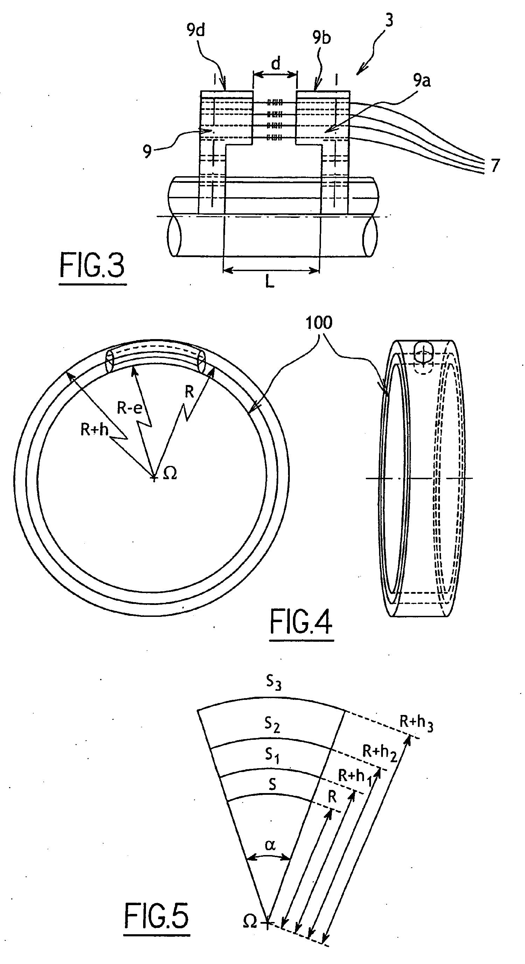

Une autre variante de réalisation est encore illustrée sur la figure 3.

Dans cette variante, les bras 4a à 4d présentent des portées 9a à 9d qui sont en décrochement vers le bras du dispositif 3 qui leur fait face parallèlement à la ligne de contact 1. De cette façon, les fibres 7 qui s'étendent entre les supports 5a et 5b sont d'une longueur de base réduite et on amplifie encore les déformations mesurées par les réseaux de Bragg dans chacun des plans de mesure.

Ainsi, si $d$ est la distance selon laquelle les fibres 7 s'étendent, $L$ la distance entre les points d'accrochage des supports 5a, 5b en V, le facteur d'amplification introduit par ce décrochement est égal à $L/d$ et est supérieur à 1.

On notera que cette amplification (différente de l'amplification décrite précédemment consistant à positionner les points de mesure à différentes hauteurs par rapport à la ligne de contact) sert à sortir l'ensemble des mesures de déformations (à la fois en flexion et en traction / compression) du bruit du système d'interrogation des capteurs (le niveau moyen de déformations, mesurées au contact du fil, étant très faible, de l'ordre du $\mu$m/m).

Bien entendu cette amplification ne permet pas à elle seule de découpler les effets de traction et de flexion.

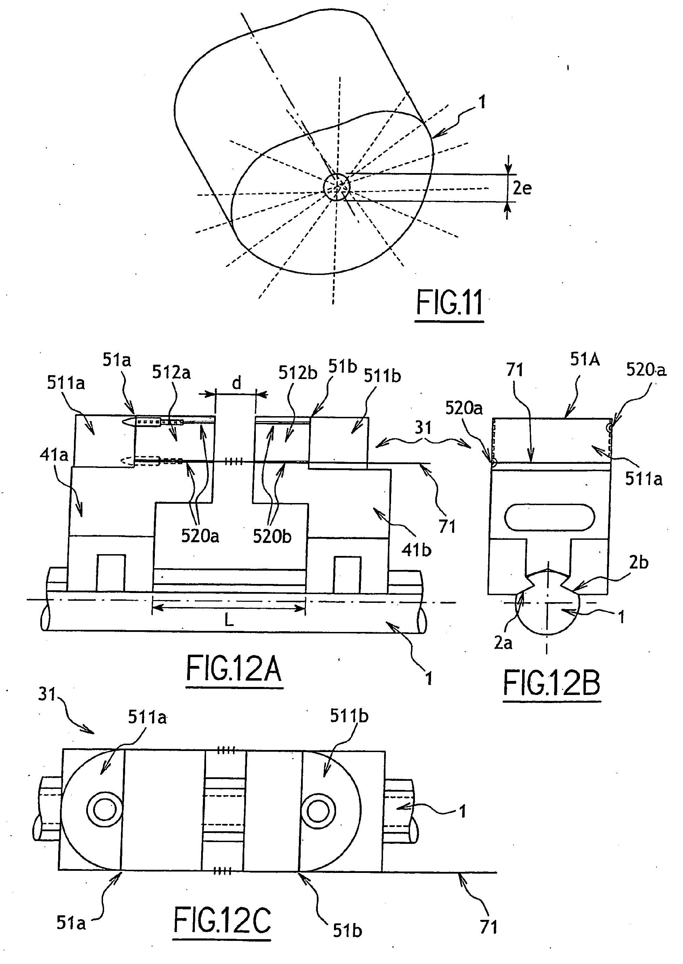

Une autre variante de réalisation est représentée sur les figures 12A à 12C.

On a représenté sur les figures 12A à 12C une ligne de contact 1, qui est un profilé de section générale cylindrique présentant, de façon connue en soi, deux rainures longitudinales 2a, 2b destinées à recevoir les mâchoires d'un dispositif de fixation (non représenté).

Sur ces rainures 2a, 2b de la ligne de contact 1, sont accrochés un ou plusieurs dispositifs de mesure du type du dispositif 31 représenté sur les figures 12A à 12C.

Un tel dispositif 31 comporte deux supports 41a, 41 b qui s'étendent à partir de la ligne de contact 1, et notamment des rainures 2a et 2b de la ligne de contact, et se font face le long de la ligne de contact 1. Ces supports 41 a, 41 b sont fixés sur la ligne de contact 1 par accrochage sur les rainures 2a et 2b (maintien par serrage assuré par un système de vis et écrous par exemple). Ces supports 41a, 41b présentent chacun un plot 51 a, 51 b dont l'extrémité 511 a, 511 b a la forme générale d'un demi-cercle (en section), et dont la partie 512a, 512b destinée à être en vis-à-vis de l'autre support est de forme parallélépipédique.

Les deux supports 41 a, 41 b portent une seule fibre optique (non représentée) comprenant au moins deux réseaux de Bragg et enroulée sur le dispositif, et plus particulièrement autour des plots 51a, 51b. Le rayon de courbure de l'extrémité 511 a, 511 b de chaque plot permet de limiter les pertes de puissance du signal optique et de faciliter le routage de la fibre optique lors de l'assemblage du dispositif, les supports étant alors rendus mécaniquement solidaires par l'intermédiaire d'une attache rigide autorisant un réglage précis de la distance entre les supports afin d'ajuster la pré-tension mécanique des fibres optiques à une valeur adéquate pour garantir une dynamique de mesure suffisante pour toutes les valeurs de flexion et de traction / compression du profilé, ces attaches étant démontables une fois le dispositif fixé sur le profilé.

Le fait de prévoir une seule fibre optique 71 dans ce mode de réalisation permet un gain de temps non négligeable à l'installation sur site du dispositif et limite les erreurs de positionnement possibles des capteurs par un opérateur. Le positionnement des capteurs à réseaux de Bragg est également facilité par l'existence de rainures 520a, 520b dans le flanc des parties 512a, 512b destinés à recevoir la fibre optique 71.

Cette fibre optique 71 est disposée de sorte que les capteurs à réseaux de Bragg s'étendent parallèlement à la ligne de contact 1. Une pluralité de capteurs est prévue sur la fibre optique 71 de sorte que deux d'entre eux soient disposés à des distances distinctes du plan de fibre neutre.

S'il est par exemple prévu au moins quatre capteurs, ceux-ci sont mis par paires de part et d'autre du plan de symétrie du dispositif 31 passant par l'axe longitudinal de la ligne de contact (plan vertical), les capteurs d'une même paire étant alors disposés à des distances distinctes du plan de fibre neutre.

Notons qu'il peut par exemple être prévu que ces dispositifs soient répartis en série sur toute la longueur de la ligne, et préférentiellement régulièrement, chaque tronçon de ligne entre deux dispositifs de fixation successifs étant équipé d'un tel dispositif de mesure 31.

Notons que la variante de réalisation comprendra préférentiellement une configuration telle qu'il existe un facteur d'amplification comme décrit ci-dessus à l'appui de la figure 3. C'est bien ce qu'illustre la figure 12A.

Quel que soit le mode de réalisation de l'invention envisagé, les dispositifs prévoient un capot (non représenté) pour protéger les réseaux de Bragg de toute agression extérieure, en particulier des conditions climatiques (vent, pluie, ... ) et de contraintes mécaniques externes (projections diverses, oiseaux, ...).

**ANNEXE 1**

**1. Mesure de la flexion d'un profilé**

**1.1 Analyse dans un plan $(P_0)$ perpendiculaire à l'axe du cylindre osculateur**

L'obtention des équations générales de la flexion simple d'un profilé passe par une première étape d'analyse des déformations dans un plan $(P_0)$ perpendiculaire à l'axe du cylindre osculateur, pour se généraliser à un plan d'analyse quelconque, les paramètres essentiels à déterminer au point de mesure local considéré étant :

- la valeur du rayon de courbure local moyen,
- la position de la fibre neutre,
- et la position dans l'espace du centre de courbure local.

**1.1.1 Déformations orthoradiales $\Delta\varepsilon_{\theta\theta}$ et rayon de courbure $R$**

Soit $C$ le cylindre osculateur du plan neutre, dont l'axe $(\Delta)$ passe par le point $\Omega$ et dont le rayon est égal à $R$. Le cylindre osculateur $C$ est référencé 100 (figure 4). Notons alors, comme présenté sur la figure 5 et dans un plan perpendiculaire à l'axe $(\Delta)$ :

- $h_1$ la distance à la fibre neutre du premier point de mesure en flexion pure,
- $h_2$ la distance à la fibre neutre du second point de mesure en flexion pure,
- $h_3$ la distance à la fibre neutre du troisième point de mesure en flexion pure.

Les déformations s'écrivent alors, pour chacun des points de mesure :

$$\begin{cases} \Delta\varepsilon_{\theta\theta} = \dfrac{\Delta L}{L_0} \\ L_0 = R\alpha \\ \Delta L = (R+h)\alpha - R\alpha \end{cases} \Rightarrow \Delta\varepsilon = \dfrac{h}{R} \Rightarrow \begin{cases} \Delta\varepsilon_{\theta\theta 1} = \dfrac{h_1}{R} \\ \Delta\varepsilon_{\theta\theta 2} = \dfrac{h_2}{R} \\ \Delta\varepsilon_{\theta\theta 3} = \dfrac{h_3}{R} \end{cases} \quad (1)$$

Les positions relatives des points de mesure $h_i - h_j$ étant connues deux à deux d'une part, et les déformations

$\Delta\varepsilon_i$ étant mesurées d'autre part, il suffit dès lors de deux positions de mesures $h_i$ et $h_j$ distinctes pour déterminer la valeur du rayon de courbure $R$ pour le couple de capteurs *(i,j)* : $R_{ij}$; et on a, par résolution du système d'équations (1) :

$$\boxed{R_{ij} = \frac{h_i - h_j}{\Delta\varepsilon_{\theta\theta_i} - \Delta\varepsilon_{\theta\theta_j}}} \qquad (2)$$

**Minimisation des erreurs de mesure - Une formulation de la valeur moyenne** $\langle R \rangle$ On peut par exemple décliner la formule (2) sous une forme moyenne $\langle R \rangle$ :

$$\boxed{\langle R \rangle = \frac{2}{n\,(n-1)} \sum_{i=1}^{n} \sum_{j=i+1}^{n} R_{ij}} \qquad (3)$$

où $n \geq 2$ est le nombre de positions de mesures distinctes.

L'intérêt de la formulation moyenne $\langle R \rangle$ selon la formule (3) est une meilleure précision de mesure (son espérance mathématique étant identique à celle de la mesure individuelle puisque c'est une moyenne), ainsi qu'une dispersion plus faible : si $\sigma_{Rij}$ est l'écart-type de la population formée des mesures individuelles $R_{ij}$, celui $\sigma_{\langle R \rangle}$ de la population formée des mesures moyennes $\langle R \rangle$ est égal à :

$$\sigma_{\langle R \rangle} = \sigma_{R_{ij}} \sqrt{\frac{2}{n\,(n-1)}} \quad \Rightarrow \quad \begin{cases} n = 3 : \ \sigma_{\langle R \rangle} \cong 0.577 \ \sigma_{R_{ij}} \\ n = 4 : \ \sigma_{\langle R \rangle} \cong 0.408 \ \sigma_{R_{ij}} \\ n = 5 : \ \sigma_{\langle R \rangle} \cong 0.316 \ \sigma_{R_{ij}} \\ n = 6 : \ \sigma_{\langle R \rangle} \cong 0.258 \ \sigma_{R_{ij}} \end{cases} \qquad (4)$$

**1.1.2 Position de la fibre neutre $z_o$**

La fibre neutre est le lieu des points où la déformation mécanique est nulle, donc caractérisée par :

$$\Delta\varepsilon_{\theta\theta} = 0 \qquad (5)$$

La fonction :

$$\Delta\varepsilon_{\theta\theta} : \ \mathbb{R} \to \mathbb{R}$$
$$h \to \frac{h}{R} \qquad (6)$$

est une fonction dépendante de $h$, dont l'origine des coordonnées en $h = 0$ est la position de la fibre neutre.
Cependant, dans le cas général, la position de la fibre neutre est inconnue, et l'origine des coordonnées est, par exemple, un point de référence de la structure instrumentée.
Dans ce cas, on doit considérer le changement de variable suivant :

$$g : \mathbb{R} \longrightarrow \mathbb{R}$$

$$h \rightarrow z - z_0 \tag{7}$$

où $z_0$ est la coordonnée de la fibre neutre dans le référentiel de l'expérimentateur, la déformation mesurée s'écrivant alors :

déformation mesurée dans le référentiel de l'expérimentateur :

$$\Delta \varepsilon_{\theta\theta} \circ g(z) = \frac{z - z_0}{R} \tag{8}$$

Ainsi, connaissant en $z_k$ la valeur de la déformation orthoradiale, notée abusivement dans le nouveau système de coordonnées $\Delta \varepsilon_{\theta\theta k}$, on peut calculer la position $z_0$ de la fibre neutre selon :

$$\Delta \varepsilon_{\theta\theta_k} = \frac{z_k - z_0}{R} \Longrightarrow \boxed{z_{0_k} = z_k - R\Delta \varepsilon_{\theta\theta_k}} \tag{9}$$

ce qui conduit, compte tenu de la formule (2), à :

$$\forall \{i, j, k\}(i \neq j) \boxed{z_{0_{ijk}} = z_k - \frac{z_i - z_j}{\Delta \varepsilon_{\theta\theta_i} - \Delta \varepsilon_{\theta\theta_j}} \Delta \varepsilon_{\theta\theta_k}} \tag{10}$$

à laquelle on préférera la formulation suivante :

$$\forall \{i, j\}(i \neq j) \boxed{z_{0_{ij}} = \frac{z_j \Delta \varepsilon_{\theta\theta_i} - z_i \Delta \varepsilon_{\theta\theta_j}}{\Delta \varepsilon_{\theta\theta_i} - \Delta \varepsilon_{\theta\theta_j}}} \tag{11}$$

**Minimisation des erreurs de mesure - Une formulation de la valeur moyenne** $\langle z_0 \rangle$ On peut là aussi exprimer sous une forme moyenne la valeur de $z_0$, avec par exemple :

$$\boxed{\langle z_0 \rangle = \frac{2}{n(n-1)} \sum_{i=1}^{n} \sum_{j=i+1}^{n} z_{0_{ij}}} \tag{12}$$

où $n \geq 2$ est le nombre de positions de mesures distinctes.

Cette formulation moyenne $\langle z_0 \rangle$ de la position de la fibre neutre permet de calculer la position de $z_0$ avec une meilleure précision, dont la dispersion $\sigma_{\langle z0 \rangle}$, par rapport à la dispersion $\sigma_{z0ij}$ des mesures individuelles $z_{0ij}$, s'exprime par :

$$\sigma\langle z_0 \rangle = \sigma_{z_{0_{ij}}} \sqrt{\frac{2}{n\,(n-1)}} \Rightarrow \begin{cases} n = 3: & \sigma_{\langle z_0 \rangle} \cong 0.577\ \sigma_{z_{0_{ij}}} \\ n = 4: & \sigma_{\langle z_0 \rangle} \cong 0.408\ \sigma_{z_{0_{ij}}} \\ n = 5: & \sigma_{\langle z_0 \rangle} \cong 0.316\ \sigma_{z_{0_{ij}}} \\ n = 6: & \sigma_{\langle z_0 \rangle} \cong 0.258\ \sigma_{z_{0_{ij}}} \end{cases} \qquad (13)$$

### 1.1.3 Position du centre de courbure $z_\Omega$

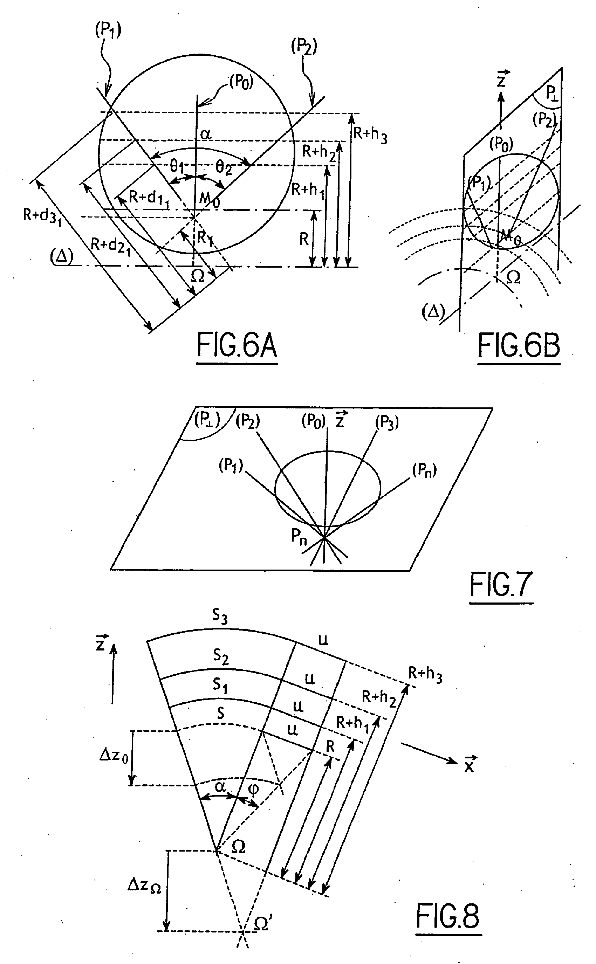

La formule (22) donne la position angulaire du plan ($P_0$), mais ne précise pas de quel côté se trouve l'axe ($\Delta$). Ainsi, si $\Omega$ est le centre de courbure, et $M_0$ le point de la fibre neutre du plan ($P_0$) (voir figure 7), alors :

$$\boxed{\Omega = M_0 - R\vec{z}} \quad \text{où}: \begin{cases} \vec{z} \text{ est le vecteur unitaire de l'axe } (z'Oz) \\ R \text{ est le rayon de courbure algébrique} \end{cases} \qquad (14)$$

qui s'écrit, à partir des mesures individuelles de deux points de mesures en $z_i$ et $z_j$, par exemple sous la forme :

$$z_{\Omega_{ij}} = z_{0_{ij}} - R_{ij} \Rightarrow \boxed{z_{\Omega_{ij}} = \frac{z_j(\Delta\varepsilon_{\theta\theta_i} + 1) - z_i(\Delta\varepsilon_{\theta\theta_j} + 1)}{\Delta\varepsilon_{\theta\theta_i} - \Delta\varepsilon_{\theta\theta_j}}} \qquad (15)$$

**Minimisation des erreurs de mesure - Une formulation de la valeur moyenne** $\langle z_\Omega \rangle$ On peut là encore exprimer sous une forme moyenne la valeur de $z_\Omega$:

$$\langle z_\Omega \rangle = \langle z_0 \rangle - \langle R \rangle \qquad (16)$$

avec par exemple :

$$\boxed{\langle z_\Omega \rangle = \frac{2}{n\,(n-1)} \sum_{i=1}^{n} \sum_{j=i+1}^{n} z_{\Omega_{ij}}} \qquad (17)$$

où $n \geq 2$ est le nombre de positions de mesures distinctes.

La dispersion de la valeur moyenne $\sigma_{\langle z_\Omega \rangle}$ est là aussi plus faible que la dispersion des valeurs individuelles $\sigma_{z_\Omega ij}$ selon :

$$\sigma\langle z_\Omega\rangle = \sigma_{\Omega_{ij}}\sqrt{\frac{2}{n(n-1)}} \quad\Rightarrow\quad \begin{cases} n = 3 : \ \sigma_{\langle z_\Omega\rangle} \cong 0.577 \ \sigma_{z_{\Omega_{ij}}} \\[2mm] n = 4 : \ \sigma_{\langle z_\Omega\rangle} \cong 0.408 \ \sigma_{z_{\Omega_{ij}}} \\[2mm] n = 5 : \ \sigma_{\langle z_\Omega\rangle} \cong 0.316 \ \sigma_{z_{\Omega_{ij}}} \\[2mm] n = 6 : \ \sigma_{\langle z_\Omega\rangle} \cong 0.258 \ \sigma_{z_{\Omega_{ij}}} \end{cases} \tag{18}$$

.

**1.2 Mesures dans un plan quelconque $(P_k)_{k\geq 1}$, non perpendiculaire à l'axe du cylindre osculateur**

**1.2.1 Position angulaire du plan $(P_0)$**

Le problème de la mesure de la flexion réside dans le fait que la position dans l'espace de l'axe (Δ) du cylindre osculateur est a *priori* inconnue : la direction de la flexion dépend en effet de la nature de la sollicitation imposée à la structure, et non pas de la position du capteur par rapport à celle-ci ; ainsi, la mesure qui est faite de cette déformation se fait a *priori* dans un plan $(P_k)$ désorienté d'un angle $\theta_k$ par rapport à un plan $(P_0)$ perpendiculaire à l'axe (Δ) du cylindre osculateur (figure 7).

Dans ces conditions, les mesures de variations de déformations orthoradiales $\Delta\varepsilon_{\theta\theta ik}$ effectuées dans les plans désorientés de type $(P_k)_{k\geq 1}$ s'écrivent :

$$\Delta\varepsilon_{\theta\theta_{i_k}} = \frac{h_i}{R} = \frac{d_{i_k}}{R}\cos\theta_k \ \ \text{les distances } d_{i_k} \text{ mesurées dans les plans } (P_k)_{k\geq 1},$$
$$\text{étant telles que : } \quad d_{i_k} = \frac{h_i}{\cos\theta_k} \tag{19}$$

l'angle $\theta_k$, propre à chaque plan de mesure $(P_k)$, étant une inconnue supplémentaire à déterminer.

Si chacune des mesures effectuées dans les plans $(P_k)_{k\geq 1}$ se font dans un même plan $(P_\perp)$ (qui n'est autre que le plan où s'inscrit la section en flexion étudiée), il est alors possible d'écrire les relations suivantes, conformément à la relation (2), puisque le rayon de courbure **R** reste le même :

$$\begin{cases} \text{dans le plan } (P_k) : R_{ij_k} = \dfrac{h_{i_k} - h_{j_k}}{\Delta\varepsilon_{\theta\theta_{i_k}} - \Delta\varepsilon_{\theta\theta_{j_k}}} = \dfrac{(d_{i_k} - d_{j_k})\cos\theta_k}{\Delta\varepsilon_{\theta\theta_{i_k}} - \Delta\varepsilon_{\theta\theta_{j_k}}} \\[5mm] \text{dans le plan } (P_l) : R_{pq_l} = \dfrac{h_{p_l} - h_{q_l}}{\Delta\varepsilon_{\theta\theta_{p_l}} - \Delta\varepsilon_{\theta\theta_{q_l}}} = \dfrac{(d_{p_l} - d_{q_l})\cos\theta_l}{\Delta\varepsilon_{\theta\theta_{p_l}} - \Delta\varepsilon_{\theta\theta_{q_l}}} \end{cases} \tag{20}$$

or nous avons l'égalité :

$$\theta_l = \underbrace{(\theta_k + \theta_l)}_{\substack{connu\ par\\construction}=\ \alpha_{kl}} - \theta_k \Rightarrow \cos\theta_l = \cos(\underbrace{\theta_k + \theta_l}_{\alpha_{kl}})\cos\theta_k + \sin(\underbrace{\theta_k + \theta_l}_{\alpha_{kl}})\sin\theta_k$$
$$\text{avec}: \{\theta_k, \theta_l\} \in \left[0, \frac{\pi}{2}\right] \times \left[0, \frac{\pi}{2}\right] \tag{21}$$

ce qui permet de transformer le système d'équations (20) pour l'exprimer en fonction d'une seule inconnue $\alpha_{kl}$, soit en notant :

$$\left.\begin{array}{l} R = R_{ij_k} = R_{pq_l} \\ \alpha_{kl} = \theta_k + \theta_l \\ \alpha_{kl} \in \left]0, \pi\right[ \end{array}\right\} \Rightarrow \left\{\begin{array}{l} \forall \{i,j\}(i \neq j) \\ \forall \{p,q\}(p \neq q) \\ \forall \{k,l\}(k \neq l) \end{array}\right. \quad \theta_{kl_{ijpq}} = \arctan\left[\frac{1}{\sin\alpha_{kl}}\left(\frac{\dfrac{d_{i_k} - d_{j_k}}{\Delta\varepsilon_{\theta\theta_{i_k}} - \Delta\varepsilon_{\theta\theta_{j_k}}}}{\dfrac{d_{p_l} - d_{q_l}}{\Delta\varepsilon_{\theta\theta_{p_l}} - \Delta\varepsilon_{\theta\theta_{q_l}}}} - \cos\alpha_{kl}\right)\right] \quad (22)$$

et on a en particulier :

$$\theta_{kl_{ijpq}} \in \left]-\frac{\pi}{2}, \frac{\pi}{2}\right[$$

**Minimisation des erreurs de mesure - Une formulation de la valeur moyenne** $\langle\theta_k\rangle$ De la même façon que précédemment, il est préférable, afin de minimiser les erreurs de mesure, de travailler sur les valeurs moyennes ; on a donc par exemple :

- pour un couple de plans quelconques $\{(P_k), (P_l)\}_{k \neq l}$:

$$\left\langle\theta_{k_l}\right\rangle = \frac{4}{n_k(n_k - 1)n_l(n_l - 1)}\sum_{i=1}^{n_k}\sum_{j=i+1}^{n_k}\sum_{p=1}^{n_l}\sum_{q=p+1}^{n_l}\theta_{kl_{ijpq}} \quad (23)$$

$$\text{où}\begin{cases} n_k \geq 2 \text{ est le nombre de mesures dans le plan }(P_k) \\ n_l \geq 2 \text{ est le nombre de mesures dans le plan }(P_l) \end{cases}$$

- et pour l'ensemble des plans $(P_k)_{k \geq 1}$:

$$\left\langle\theta_k\right\rangle = \frac{1}{N-1}\sum_{\substack{l=1 \\ l \neq k}}^{N}\left\langle\theta_{k_l}\right\rangle \quad (24)$$

où **N** est le nombre total de plans de type $(P_k)_{k \geq 1}$
soit, exprimé sous une forme plus globale :

$$\left\langle\theta_k\right\rangle = \frac{4}{(N-1)n_k(n_k - 1)}\sum_{\substack{l=1 \\ l \neq k}}^{N}\frac{1}{n_l(n_l - 1)}\sum_{i=1}^{n_k}\sum_{j=i+1}^{n_k}\sum_{p=1}^{n_l}\sum_{q=p+1}^{n_l}\theta_{kl_{ijpq}} \quad (25)$$

**1.2.2 Rayon de courbure local $R$ dans le plan $(P_0)$**

On a, à partir par exemple des équations (20) en substituant à la valeur vraie $\theta_k$ son estimation sans biais $\langle \theta_k \rangle$ :

$$\forall \{i,j,k\}(i \neq j) \quad \boxed{R_{ij_k} = \frac{d_{i_k} - d_{j_k}}{\Delta\varepsilon_{\theta\theta_{i_k}} - \Delta\varepsilon_{\theta\theta_{j_k}}} \cos\langle\theta_k\rangle} \tag{26}$$

**Minimisation des erreurs de mesure - Une formulation de la valeur moyenne** $\langle R \rangle$ La minimisation des erreurs passe par le calcul de la valeur moyenne qui est un estimateur sans biais de la valeur vraie :

- dans le plan de type $(P_k)_{k \geq 1}$ d'une part :

$$\boxed{\langle R_k \rangle = \frac{2}{n_k(n_k - 1)} \sum_{i=1}^{n_k} \sum_{j=i+1}^{n_k} R_{ij_k}} \tag{27}$$

où $n_k$ est le nombre de positions de mesures distinctes dans le plan $(P_k)$
- sur tous les plans $(P_k)_{k \geq 1}$ d'autre part :

$$\boxed{\langle R \rangle = \frac{1}{N} \sum_{i=1}^{N} \langle R_k \rangle} \tag{28}$$

où $N$ est le nombre total de plans de type $(P_k)_{k \geq 1}$

**1.2.3 Position de la fibre neutre $z_0$ dans le plan $(P_0)$**

Pour calculer la position du centre de courbure local $\Omega$, il faut se placer dans le plan $(P_0)$. Pour cela, il faut :

- définir une origine commune en $\bar{z}$ des coordonnées à tous les couples de plans $\{(P_k), (P_l)\}_{k \neq l}$ : par exemple, et de façon arbitraire, le point $P_n = \cap_k (P_k) \cap (P_\perp)$,
- et multiplier :

  - par : $\cos \theta_k$ chacune des distances entre les points de mesure du plan $(P_k)$,
  - par : $\cos \theta_l = \cos(\alpha - \theta_k)$ chacune des distances entre les points de mesures du plan $(P_l)$,

pour obtenir, d'une manière générale en substituant à $\theta_k$ sa valeur moyenne $\langle \theta_k \rangle$, les relations suivantes :

$$\forall \{i,j,k\}(i \neq j) \quad \boxed{z_{0_{ij_k}} = \frac{d_{j_k}\Delta\varepsilon_{\theta\theta_{i_k}} - d_{i_k}\Delta\varepsilon_{\theta\theta_{j_k}}}{\Delta\varepsilon_{\theta\theta_{i_k}} - \Delta\varepsilon_{\theta\theta_{j_k}}} \cos\langle\theta_k\rangle} \tag{29}$$

**Minimisation des erreurs de mesure - Une formulation de la valeur moyenne** $\langle z_0 \rangle$ On fait tout d'abord la moyenne :

- dans chaque plan $(P_k)$ :

$$\left\langle z_{0_k} \right\rangle = \frac{2}{n_k \left( n_k - 1 \right)} \sum_{i=1}^{n_k} \sum_{j=i+1}^{n_k} z_{0_{ij_k}} \qquad (30)$$

où $n_k$ est le nombre de positions de mesures distinctes dans le plan $(P_k)$
- pour tous les plans $(P_k)_{k \geq 1}$ :

$$\left\langle z_0 \right\rangle = \frac{1}{N} \sum_{i=1}^{N} \left\langle z_{0_k} \right\rangle \qquad (31)$$

où $N$ est le nombre total de plans de type $(P_k)_{k \geq 1}$

### 1.2.4 Position spatiale $z_\Omega$ du centre de courbure local $\Omega$ dans le plan $(P_0)$

La position du centre de courbure peut par exemple s'écrire :

$$z_{\Omega_{ij_k}} = z_{0_{ij_k}} - R_{ij_k} \Rightarrow \boxed{z_{\Omega_{ij_k}} = \frac{d_{j_k} \left( \Delta\varepsilon_{\theta\theta_{i_k}} + 1 \right) - d_{i_k} \left( \Delta\varepsilon_{\theta\theta_{j_k}} + 1 \right)}{\Delta\varepsilon_{\theta\theta_{i_k}} - \Delta\varepsilon_{\theta\theta_{j_k}}} \cos\left\langle \theta_k \right\rangle} \qquad (32)$$

**Minimisation des erreurs de mesure - Une formulation de la valeur moyenne** $\left\langle z_\Omega \right\rangle$ Comme auparavant, on fait tout d'abord la moyenne :

- dans chaque plan $(P_k)$ :

$$\left\langle z_{\Omega_k} \right\rangle = \frac{2}{n_k \left( n_k - 1 \right)} \sum_{i=1}^{n_k} \sum_{j=i+1}^{n_k} z_{\Omega_{ij_k}} \qquad (33)$$

où $n_k$ est le nombre de positions de mesures distinctes dans le plan $(P_k)$
- puis dans tous les $(P_k)_{k \geq 1}$ :

$$\left\langle z_\Omega \right\rangle = \frac{1}{N} \sum_{i=1}^{N} \left\langle z_{\Omega_k} \right\rangle \qquad (34)$$

où $N$ est le nombre total de plans de type $(P_k)_{k \geq 1}$

### 2. Influence et mesure d'une traction additionnelle

Dans le cadre de déformations élastiques linéaires, on peut appliquer le principe de superposition permettant d'affirmer que la variation déformation totale est, dans notre cas particulier, la somme d'une variation de déformation de flexion et d'une variation de déformation de traction.

Les déformations dues à la traction ont au premier ordre pour effet de provoquer un allongement $u$ identique quel que soit le point de la section (figure (5)), puisque l'on suppose que cette traction s'exerce selon l'axe principal du profilé, ce qui est une hypothèse réaliste si la flexion reste faible, ou dit autrement : si le rayon de courbure est grand devant l'épaisseur du profilé.

**2.1 Analyse dans un plan $(P_0)$ perpendiculaire à l'axe du cylindre osculateur**

**2.1.1 Décalage en position de la fibre neutre $\Delta z_0$**

Si on appelle $\Delta\varepsilon_{xx}$ la variation de déformation due aux seuls efforts de traction s'exerçant selon un axe $\overline{x}$ sur la tranche en flexion comprise dans le cône d'angle au sommet a, alors le déplacement correspondant $u$ s'écrit :

$$u = \alpha R \Delta\varepsilon_{xx} \qquad\qquad (35)$$

Dans ce cas, la fibre neutre se trouve décalée suivant $\overline{z}$ d'une quantité $\Delta z_0$ telle que $z_0 \rightarrow z_0 + \Delta z_0$, et:

$$\Delta\varepsilon_{\theta\theta} = -\Delta\varepsilon_{xx} \Rightarrow \boxed{\Delta z_0 = -R\Delta\varepsilon_{xx}} \qquad\qquad (36)$$

($R$ étant le rayon de courbure généré par la flexion pure)
ce qui correspond à une augmentation, au niveau de la fibre neutre originelle, d'un angle $\varphi$ de l'angle au sommet $\alpha \rightarrow \alpha + \varphi$, que l'on retrouve par construction graphique, et au premier ordre près (car on prend le segment, et non pas l'arc de cercle correspondant à $u$), sur la figure (5), et tel que :

$$\varphi = \frac{u}{R} \Rightarrow \boxed{\varphi = \alpha\,\Delta\varepsilon_{xx}} \qquad\qquad (37)$$

**2.1.2 Rayon de courbure apparent R' et décalage en position du centre de courbure $\Delta z_\Omega$**

Comme on peut le voir sur la figure (5), l'application d'un effort de traction a pour effet de modifier la position du rayon de courbure pour le faire passer du point $\Omega$ dans le cas d'une flexion pure, à $\Omega'$ en cas d'efforts combinés : $\Omega \rightarrow \Omega'$. Ce changement de position en z, noté $\Delta z_\Omega$ est tel que $z_\Omega \rightarrow z_\Omega + \Delta z_\Omega$, et :

$$(\alpha + \varphi)\,R = \alpha\,(R - \Delta z_\Omega) \Rightarrow \boxed{\Delta z_\Omega = -R\,\Delta\varepsilon_{xx}} \qquad\qquad (38)$$

ce qui permet de noter en passant l'égalité :

$$\Delta z_\Omega = \Delta z_0 \qquad\qquad (39)$$

Le rayon de courbure apparent $R'$ est ainsi donné par la relation :

$$R' = R - \Delta z_\Omega \Rightarrow \boxed{R' = (1 + \Delta\varepsilon_{xx})\,R} \qquad\qquad (40)$$

### 2.1.3 Rayon de courbure *R* imposé par la seule flexion

La mise en équation du problème consiste à écrire la variation de déformation totale Aε mesurée pour chaque position de mesure *i*, qui est la somme :

- de la variation de déformation générée $\Delta\varepsilon_{\theta\theta}$ par la flexion de centre de courbure **R**,
- et de la variation de déformation $\Delta\varepsilon_{xx}$ due à la traction,

$$\forall i: \ \Delta\varepsilon_i = \Delta\varepsilon_{\theta\theta_i} + \Delta\varepsilon_{xx} \Rightarrow \Delta\varepsilon_i = \frac{h_i}{R} + \Delta\varepsilon_{xx} \qquad \qquad (41)$$

Ainsi, si deux mesures distinctes sont réalisées dans le plan *(P₀)*, on a le système suivant :

$$\forall \{i,j\}(i \neq j)\begin{cases} \Delta\varepsilon_i = \dfrac{h_i}{R} + \Delta\varepsilon_{xx} \\[2mm] \Delta\varepsilon_j = \dfrac{h_j}{R} + \Delta\varepsilon_{xx} \end{cases} \qquad \qquad (42)$$

En formant dans un premier temps la différence terme à terme, on obtient directement la valeur du rayon de courbure **R** calculé à partir des mesures en *i* et *j* : **R$_{ij}$** :

$$\forall \{i,j\}(i \neq j) \quad \boxed{R_{ij} = \frac{h_i - h_j}{\Delta\varepsilon_i - \Delta\varepsilon_j}} \qquad \qquad (43)$$

et on remarquera que son expression est de la même nature que celle décrite par l'équation (2).

*Le terme additionnel de traction disparaissant dans chaque différence $\Delta\varepsilon_{ik}$ - $\Delta\varepsilon_{jk}$, toutes les formules établies précédemment pour le calcul dans les plans désorientés $(P_k)_{k\geq1}$ restent donc valides.*

### 2.1.4 Position de la fibre neutre z$_o$

Comme dans le cas de la flexion pure, le calcul de la position de la fibre neutre **z$_0$** en coordonnées suivant $\bar{z}$ avec une origine connue et liée au référentiel instrumenté, et pour une position de mesure **k**, conduit à :

$$\Delta\varepsilon_k = \frac{z_k - z_{0_k}}{R} + \Delta\varepsilon_{xx} \Rightarrow \quad \boxed{z_{0_k} = z_k - \left(\Delta\varepsilon_k - \Delta\varepsilon_{xx}\right)R} \qquad \qquad (44)$$

et, compte tenu de la formule (43) :

$$\forall \{i,j,k\}(i \neq j) \quad \boxed{z_{0_{ij_k}} = z_k - \frac{z_i - z_j}{\Delta\varepsilon_i - \Delta\varepsilon_j}\Delta\varepsilon_k - R\Delta\varepsilon_{xx}} \qquad \qquad (45)$$

formule à laquelle on préférera la forme ci-dessous :

$$\forall \{i, j\} \; (i \neq j) \quad \boxed{z_{0_{ij}} = \frac{z_j \, \Delta \varepsilon_i - z_i \, \Delta \varepsilon_i}{\Delta \varepsilon_i - \Delta \varepsilon_j} - R \Delta \varepsilon_{xx}} \qquad (46)$$

### 2.1.5 Hypothèse simplificatrice, et calcul de l'effet de traction

Dans un souci de simplification, et au premier ordre près (ce qui peut se justifier puisque la ligne de contact n'est qu'en contact quasi ponctuel, et pendant un laps de temps très court, avec le pantographe), on supposera que la fibre neutre est située dans la section étudiée, et telle que le moment exercé par les efforts normaux à cette section **S** sont nuls :

$$\iint_S \sigma_{\theta\theta} dS = 0 \;\; \Rightarrow \;\; \boxed{\iint_S \Delta \varepsilon \, dS = 0} \qquad (47)$$

(vrai si le matériau est incompressible, c'est à dire si Trace [$\varepsilon$] = 0)
ce qui s'écrit dans notre cas sous la forme :

$$\iint_S \left( \frac{h}{R} + \Delta \varepsilon_{xx} \right) dS = 0 \qquad (48)$$

On choisira plutôt de résoudre l'équation en l'absence de traction ($\Delta \varepsilon_{xx}$ = **0**), pour calculer la position du plan neutre $z_0$ en flexion pure, valeur à laquelle on ajoutera la valeur $\Delta z_0$ si nécessaire, l'équation en $z_0$ s'écrivant finalement :

$$\boxed{\iint_{z \in S} (z - z_0) dS = 0} \quad puis : z_0 \to z_0 + \Delta z_0 \qquad (49)$$

La valeur $h_i = z_i - z_0$ étant dès lors connue (ou tout simplement mesurée si la surface d'intégration est compliquée, et par la suite, supposée constante), on a donc:

$$\forall i : \quad \Delta \varepsilon_{xx} = \Delta \varepsilon_i - \frac{h_i}{R} \qquad (50)$$

ce qui permet d'exprimer la déformation en traction $\Delta \varepsilon_{xxij}$ en fonction des mesures aux points **i** et **j** selon :

$$\forall \{i, j\} \; (i \neq j) \quad \boxed{\Delta \varepsilon_{xx_{ij}} = \frac{h_i \, \Delta \varepsilon_j - h_j \, \Delta \varepsilon_i}{h_i - h_j}} \; où \; h_i = z_i - z_0 \qquad (51)$$

**Minimisation des erreurs de mesure - Une formulation de la valeur moyenne** $\langle \Delta \varepsilon_{xx} \rangle$ Afin de minimiser les erreurs de mesure, on utilisera de préférence la valeur moyenne de la composante de déformation en traction $\langle \Delta \varepsilon_{xx} \rangle$ qui peut s'exprimer sous la forme :

$$\left\langle \Delta\varepsilon_{xx} \right\rangle = \frac{2}{n\left(n-1\right)} \sum_{i=1}^{n} \sum_{j=i+1}^{n} \Delta\varepsilon_{xx_{ij}} \tag{52}$$

où $n \geq 2$ est le nombre de positions de mesures distinctes

L'utilisation de la valeur moyenne permet de réduire la dispersion de la mesure $\sigma_{\langle\Delta\varepsilon xx\rangle}$ par rapport à celle des mesures individuelles $\sigma_{\Delta\varepsilon xxij}$ selon la relation :

$$\sigma\left\langle \Delta\varepsilon_{xx} \right\rangle = \sigma_{\Delta\varepsilon_{xy}} \sqrt{\frac{2}{n\left(n-1\right)}} \quad \Rightarrow \quad \begin{cases} n = 3 : & \sigma_{\langle\Delta\varepsilon_{xx}\rangle} \cong 0.577 \ \sigma_{\Delta\varepsilon_{xy}} \\ n = 4 : & \sigma_{\langle\Delta\varepsilon_{xx}\rangle} \cong 0.408 \ \sigma_{\Delta\varepsilon_{xy}} \\ n = 5 : & \sigma_{\langle\Delta\varepsilon_{xx}\rangle} \cong 0.316 \ \sigma_{\Delta\varepsilon_{xy}} \\ n = 6 : & \sigma_{\langle\Delta\varepsilon_{xx}\rangle} \cong 0.258 \ \sigma_{\Delta\varepsilon_{xy}} \end{cases} \tag{53}$$

**Influence d'une erreur de positionnement de la fibre neutre** Si la fibre neutre a été mal positionnée, ceci peut avoir une influence significative sur la mesure des variations de déformations en traction $\Delta\varepsilon_{xx}$.

Si $p = h + e$ est la position du point de mesure positionné en $h$ et entaché d'une erreur $e$, la valeur calculée $\Delta\varepsilon_{xx}$ est entachée à son tour d'une erreur absolue $E(\Delta_\varepsilon)$ telle que :

$$E\left(\Delta\varepsilon\right) = \frac{e}{R} \tag{54}$$

et d'une erreur relative $\varepsilon(\Delta\varepsilon)$ :

$$\varepsilon(\Delta\varepsilon) = \frac{e}{h + R\Delta\varepsilon_{xx}} \tag{55}$$

$R$, $\Delta\varepsilon$ et $e$ étant bornés, il est encore possible d'agir sur la position $h$ des points de mesure afin de réduire l'erreur de mesure relative $\varepsilon(\Delta\varepsilon)$ en positionnant ceux-ci le plus loin possible de la fibre neutre, puisque l'on a :

$$\lim_{h\to\infty} \varepsilon\left(\Delta\varepsilon\right) = 0 \tag{56}$$

On positionnera donc de préférence les points de mesure le plus loin possible de la section à mesurer.

**2.1.6 Mesure de la flexion $\Delta\varepsilon_{\theta\theta}$**

On a donc, compte tenu de l'expression de $R_{ij}$, la mesure de flexion est quant à elle donnée par :

$$\Delta\varepsilon_{\theta\theta} = \frac{h}{R} \tag{57}$$

dont les erreurs absolues et relatives sont identiques à celles de la déformation totale $\Delta\varepsilon$, que l'on minimise de la même façon, en positionnant les points de mesure aussi loin que possible de la section à mesurer, et dans ce cas on a :

$$\left| \Delta\varepsilon_{\theta\theta} \tilde{\infty} \frac{z}{R} \right| \qquad (58)$$

**2.2 Mesures dans un plan quelconque $(P_k)_{k\geq1}$, non perpendiculaire à l'axe du cylindre osculateur**

**2.2.1 Position angulaire du plan $(P_0)$**

Compte tenu du fait que la formulation de l'angle d'orientation $\theta_k$ du plan $(P_0)$ par rapport au plan $(P_k)_{k\geq1}$ ne fait intervenir que des différences entre les mesures de variations de déformations $\Delta\varepsilon_i$, la contribution de l'effet de traction disparaît, et finalement, on peut à nouveau exprimer l'angle $\theta_{klijpq}$ calculé à partir des mesures $i$ et $j$ dans le plan

$$\left(P_k\right)_{\substack{k\geq1 \\ k\neq l}} \text{ et } p \text{ et } q \text{ dans le plan } \left(P_l\right)_{\substack{l\geq1 \\ l\neq k}}, \text{ , sous la forme :}$$

$$\left.\begin{array}{l} \alpha_{kl} = \theta_k + \theta_l \\ \alpha_{kl} \in \left]0,\pi\right[ \end{array}\right\} \Rightarrow \left\{\begin{array}{l} \forall\,\{i,j\}\,(i\neq j) \\ \forall\,\{p,q\}\,(p\neq q) \\ \forall\,\{k,l\}\,(k\neq l) \end{array}\right. \left| \theta_{kl_{ijpq}} = \arctan\left[ \frac{1}{\sin\alpha_{kl}}\left( \frac{\dfrac{d_{i_k}-d_{j_k}}{\Delta\varepsilon_{i_k}-\Delta\varepsilon_{j_k}}}{\dfrac{d_{p_l}-d_{q_l}}{\Delta\varepsilon_{p_l}-\Delta\varepsilon_{q_l}}} - \cos\alpha_{kl} \right) \right] \right| \qquad (59)$$

et les formules (23), (24) et (25) restent valides.

**2.2.2 Rayon de courbure local dans le plan $(P_0)$**

De la même façon, puisque les formules précédentes ne font intervenir que des différences entre les variations de déformations $\Delta\varepsilon_i$, les formules restent inchangées et on a :

$$\forall\,\{i,j,k\}\,(i\neq j) \left| R_{ij_k} = \frac{d_{i_k}-d_{j_k}}{\Delta\varepsilon_{i_k}-\Delta\varepsilon_{j_k}}\cos\langle\theta_k\rangle \right| \qquad (60)$$

et les formules (27) et (28) restent valides.

**2.2.3 Mesure de la traction $\Delta\varepsilon_{xx}$**

Mise à part l'hypothèse précédente qui positionne, de préférence, les points de mesure au plus loin de la section à mesurer afin de minimiser les erreurs de mesure, les formulations précédentes restent les mêmes et on a, pour des mesures se faisant dans le plan $(P_k)$ :

$$\forall\,\{i,j,k\}\,(i\neq j) \left| \Delta\varepsilon_{xx_{ij_k}} = \frac{d_{i_k}\Delta\varepsilon_{j_k} - d_{j_k}\Delta\varepsilon_{i_k}}{d_{i_k}-d_{j_k}} \right| \qquad (61)$$

**Minimisation des erreurs de mesure - Une formulation de la valeur moyenne** $\langle \Delta\varepsilon_{xx}\rangle$ On recourt, comme toujours, à la valeur moyenne afin de minimiser les erreurs de mesure :

- pour chaque plan de mesure $(P_k)$ :

$$\boxed{\left\langle \Delta\varepsilon_{xx_k}\right\rangle = \frac{2}{n_k\left(n_k-1\right)}\sum_{i=1}^{n_k}\sum_{j=i+1}^{n_k}\Delta\varepsilon_{xx_{ij_k}}} \qquad (62)$$

où $n_k \geq 2$ est le nombre de mesures dans le plan $(P_k)$
- pour l'ensemble des plans de mesure $(P_k)$ :

$$\boxed{\left\langle \Delta\varepsilon_{xx}\right\rangle = \frac{1}{N}\sum_{k=1}^{N}\left\langle\Delta\varepsilon_{xx_k}\right\rangle} \qquad (63)$$

où $N$ est le nombre total de plans de type $(P_k)_{k\geq 1}$

**2.2.4 Mesure de la flexion** $\Delta\varepsilon_{\theta\theta}$

En faisant l'hypothèse de mesures aussi éloignées que possible de la section à mesurer, on est en droit d'écrire, pour la mesure au point $i$ dans le plan $(P_k)$ :

$$\Delta\varepsilon_{\theta\theta}\widetilde{\infty}\frac{d}{R}\cos\theta \;\Rightarrow\; \forall\{i,j,k\}(i\neq j)\boxed{\Delta\varepsilon_{\theta\theta_{i_{jk}}}\widetilde{\infty}\frac{\left(\Delta\varepsilon_{i_k}-\Delta\varepsilon_{j_k}\right)d_{i_k}}{d_{i_k}-d_{j_k}}} \qquad (64)$$

**2.3 Utilisation des formules**

On utilise les formules établies de la façon suivante :

- calcul de l'angle d'orientation moyen $(\theta_k) = (P_k)(P_0)$ du plan $(P_0)$ où se trouve le centre de courbure à partir des mesures dans les plans $(P_k)$ et $(P_l)$ :

  - mesure individuelle à partir des points $i$ et $j$ dans le plan $(P_k)$ et $p$ et $q$ dans le plan $(P_l)$ :

$$\begin{cases}\forall\{i,j\}\;(i\neq j)\\ \forall\{p,q\}\;(p\neq q)\\ \forall\{k,l\}\;(k\neq l)\end{cases}\boxed{\theta_{kl_{ijpq}}=\arctan\left[\frac{1}{\sin\alpha_{kl}}\left(\frac{\dfrac{d_{i_k}-d_{j_k}}{\Delta\varepsilon_{i_k}-\Delta\varepsilon_{j_k}}}{\dfrac{d_{p_l}-d_{q_l}}{\Delta\varepsilon_{p_l}-\Delta\varepsilon_{q_l}}}-\cos\alpha_{kl}\right)\right]}$$

- mesure moyenne $\langle\theta_{kl}\rangle$ pour un couple de plans quelconques $\{(P_k),(P_l)\}_{k\neq l}$ :

$$\langle \theta_{k_l} \rangle = \frac{4}{n_k\,(n_k-1)\,n_l(n_l-1)} \sum_{i=1}^{n_k} \sum_{j=i+1}^{n_k} \sum_{p=1}^{n_l} \sum_{q=p+1}^{n_l} \theta_{k_{l_{ijpq}}}$$

$$\text{où} \begin{cases} n_k \geq 2 \ \textit{est le nombre de mesures dans le plan}\ (P_k) \\ n_l \geq 2 \ \textit{est le nombre de mesures dans le plan}\ (P_l) \end{cases}$$

- et la valeur moyenne $\langle \theta_k \rangle$ pour l'ensemble des plans $(P_k)_{k\geq 1}$ :

$$\langle \theta_k \rangle = \frac{1}{N-1} \sum_{\substack{l=1 \\ l \neq k}}^{N} \langle \theta_{k_l} \rangle$$

où **N** est le nombre total de plans de type $(P_k)_{k\geq 1}$

- calcul du rayon de courbure moyen $\langle R \rangle$ :

  - valeur individuelle à partir des mesures **i** et **j** dans le plan $(P_k)$ :

$$\forall \{i,j,k\}\,(i \neq j) \quad R_{ij_k} = \frac{d_{i_k} - d_{j_k}}{\Delta \varepsilon_{i_k} - \Delta \varepsilon_{j_k}} \cos\langle \theta_k \rangle$$

  - valeur moyenne $\langle R_k \rangle$ dans le plan de type $(P_k)_{k\geq 1}$ d'une part :

$$\langle R_k \rangle = \frac{2}{n_k\,(n_k-1)} \sum_{i=1}^{n_k} \sum_{j=i+1}^{n_k} R_{ij_k}$$

où $n_k$ est le nombre de positions de mesures distinctes dans le plan $(P_k)$
  - valeur moyenne $(R)$ calculée à partir de tous les plans $(P_k)_{k\geq 1}$ :

$$\langle R \rangle = \frac{1}{N} \sum_{i=1}^{N} \langle R_k \rangle$$

où **N** est le nombre total de plans de type $(P_k)_{k\geq 1}$

- calcul de la traction moyenne $\langle \Delta \varepsilon_{xx} \rangle$ :

  - valeur individuelle à partir des mesures **i** et **j** dans le plan $(P_k)$ :

$$\forall \{i,j,k\}(i \neq j) \quad \boxed{\Delta\varepsilon_{xx_{ij_k}} = \frac{d_{i_k}\Delta\varepsilon_{j_k} - d_{j_k}\Delta\varepsilon_{i_k}}{d_{i_k} - d_{j_k}}}$$

cette valeur étant d'autant plus juste que les points de mesure *i* et *j* sont éloignés de la section à mesurer ;

-   valeur moyenne $\langle\Delta\varepsilon_{xxk}\rangle$ calculée à partir des mesures dans le plan $(P_k)$ :

$$\boxed{\left\langle\Delta\varepsilon_{xx_k}\right\rangle = \frac{2}{n_k(n_k-1)}\sum_{i=1}^{n_k}\sum_{j=i+1}^{n_k}\Delta\varepsilon_{xx_{ij_k}}}$$

où $n_k \geq 2$ est le nombre de mesures dans le plan $(P_k)$

-   valeur moyenne $\langle\Delta\varepsilon_{xx}\rangle$ calculée à partir de l'ensemble des plans de mesure $(P_k)$ :

$$\boxed{\left\langle\Delta\varepsilon_{xx}\right\rangle = \frac{1}{N}\sum_{k=1}^{N}\left\langle\Delta\varepsilon_{xx_k}\right\rangle}$$

où *N* est le nombre total de plans de type $(P_k)_{k\geq1}$

-   calcul de la flexion $\Delta\varepsilon_{\theta\theta}$ :

$$\forall \{i,j,k\}(i \neq j) \quad \boxed{\Delta\varepsilon_{\theta\theta_{i_{ij_k}}} \widetilde{\infty} \frac{\left(\Delta\varepsilon_{i_k} - \Delta\varepsilon_{j_k}\right)d_{i_k}}{d_{i_k} - d_{j_k}}}$$

cette valeur étant dépendante des positions des points de mesure *i* et *j* du plan $(P_k)$, et d'autant plus juste qu'ils sont positionnés loin de la section à mesurer.

**2.4 Utilisation du capteur pour la mesure des efforts de contact et de la déflexion**

**2.4.1 Utilisation ponctuelle : quantification relative des efforts horizontaux et verticaux sur une portion de trajet**

Si $\overline{F}_N$ est la composante normale de la force $\overline{F}$ exercée par le pantographe sur sa ligne.caténaire, alors celle-ci est dirigée dans le sens du rayon de courbure, mais à l'opposé de son centre Ω; alors, en notant :

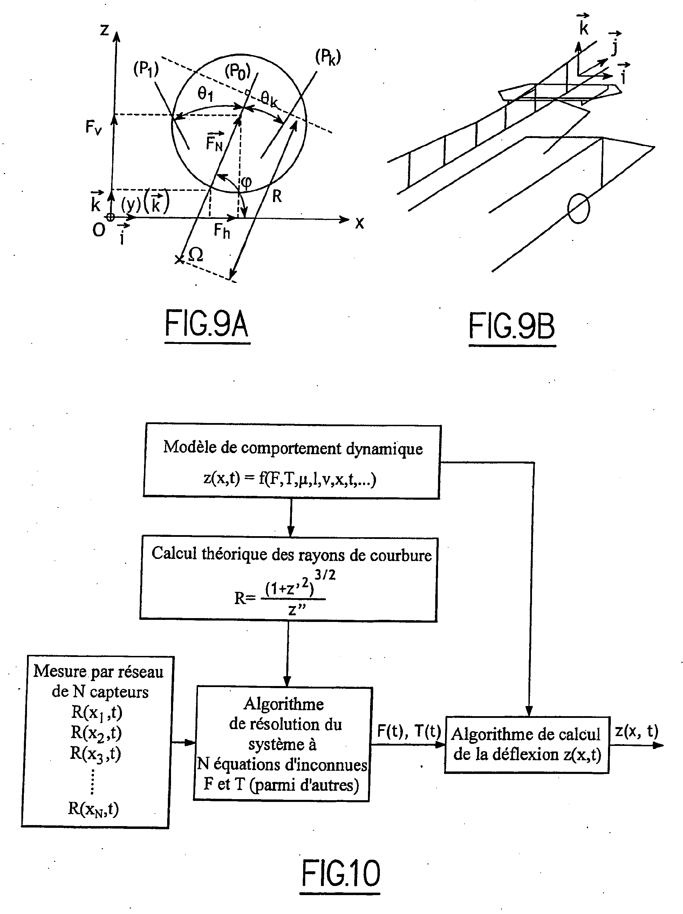

-   φ l'angle entre le plan $(P_0)$ et l'horizontale,
-   $F_h$ la valeur algébrique de la force horizontale transverse exercée par le pantographe sur la ligne de contact,
-   $F_v$ la valeur algébrique de la force verticale exercée par le pantographe sur la ligne de contact,

on a alors, à supposer que $\overline{j}$ indique la direction de circulation du train (voir figure 9B) :

$$\begin{cases} F_h = \vec{F}_N \cdot \vec{\imath} \\ F_v = \vec{F}_N \cdot \vec{k} \end{cases} \Leftrightarrow \begin{cases} F_h = \left\| \vec{F}_N \right\| \cos \varphi \\ F_v = \left\| \vec{F}_N \right\| \sin \varphi \end{cases} \Rightarrow \boxed{\frac{F_v}{F_h} = \tan \varphi} \qquad (67)$$

La position du plan $(P_k)$ par rapport à l'horizontale étant connue, l'angle $\varphi$ peut donc se mesurer, et par conséquent la contribution relative des efforts verticaux et horizontaux transverses.

Cette contribution relative peut se faire à chaque endroit où est disposé un capteur pour la mesure des déformations de la ligne caténaire, ainsi, si ces capteurs sont distribués de façon régulière sur la ligne caténaire, il sera possible de déterminer l'évolution relative des efforts verticaux et horizontaux sur cette portion de trajet.

### 2.4.2 Utilisation en série : mesure des efforts absolus

Une autre utilisation des capteurs repose sur les mesures fournies par un réseau de capteurs positionnés à des endroits stratégiques de la ligne, l'idée étant de calculer, grâce aux données de déformations locales fournies par chacun de ces capteurs au cours du temps, la valeur de la force de contact instantanée.

De façon simplifiée dans le cadre d'efforts verticaux exercés sur la ligne de contact par le pantographe, nous pouvons en effet écrire [Kießling et al., 2001][1] :

$$z(x,t) = f(F,T,\mu,l,v,x,t,\ldots) \text{ où } \begin{cases} F \text{ est la force de contact} \\ T \text{ est la tension du fil} \\ \mu \text{ est la masse linéique du fil} \\ l \text{ est la longueur caractéristique du fil prise en compte} \\ v \text{ est la vitesse du train} \\ x \text{ est la position} \\ t \text{ est le temps} \end{cases} \qquad (68)$$

équation de laquelle on peut en tirer - que ce soit de façon analytique ou numérique - les informations de déformations locales, le rayon de courbure se calculant à partir de la formule :

$$R = \frac{\left(1 + z'^2\right)^{\frac{3}{2}}}{z''} \qquad (69)$$

et dans le cas où $z'^2 \ll 1$, on procède généralement à l'approximation :

que l'on mesure à l'aide des capteurs décrits dans ce document, par application de la formule (27).

On obtient alors un système de **N** équations à deux inconnues principales **F(t)** et **T(t)** (la masse linéique $\mu$, la vitesse **v**, les abscisses **$x_i$** et le temps **t** étant a *priori* connus), du type :

$$au\ temps\ t : \begin{cases} \dfrac{\partial^2 f(F,T,\mu,l,v,x_1,t,...)}{\partial x^2} \cong \dfrac{1}{R(x_1,t)} \\[2mm] \dfrac{\partial^2 f(F,T,\mu,l,v,x_2,t,...)}{\partial x^2} \cong \dfrac{1}{R(x_2,t)} \quad \textit{résolution du système et obtention de } F(t) \textit{ et } T(t) \qquad (70) \\[1mm] \vdots \\[2mm] \dfrac{\partial^2 f(F,T,\mu,l,v,x_N,t,...)}{\partial x^2} \cong \dfrac{1}{R(x_N,t)} \end{cases}$$

duquel il est en principe possible (si ce système est inversible, ce qui est certainement le cas puisqu'il s'agit de la formalisation d'un problème réel), de déduire la valeur de la force de contact **F** (et en passant la tension **T** du fil) au temps **t**, la difficulté du travail résidant dans la formulation analytique (voire numérique) de la relation **f** qui doit être au plus près du problème réel.

Bien que la formule tirée de cet ouvrage [Kießling et al., 2001] ne soit qu'une approximation (elle repose uniquement sur l'intégration de la première équation du principe fondamental de la dynamique, et ne prend aucunement en compte l'équation de bilan des moments cinétiques, et par conséquent le moment d'inertie du fil qui a un diamètre non nul), elle a cependant le mérite de montrer qu'il est possible de mettre en équation la déflexion **z** sous une forme : $z(x, t) = f(F, T, p, l, v, x, t, ...)$ puisque la solution proposée s'écrit :

$$z(x,t) = \frac{2Fl}{\mu\pi^2(c_p^2 - v^2)} \cdot \sum_{n=1}^{\infty} \frac{1}{n^2} \sin\frac{n\pi x}{l}\left(\sin\frac{n\pi v t}{l} - \frac{v}{c_p}\sin\frac{n\pi c_p t}{l}\right) avec\ c_p = \sqrt{\frac{T}{\mu}}$$

Le calcul de la force de contact **F(t)** sera d'autant plus précis que le nombre de capteurs (et par conséquent le nombre **N** d'équations du système) sera important.

### 2.4.3 Utilisation en série : mesure de la déflexion absolue

Une fois la force **F** et la tension **T** obtenues grâce à la mesure du rayon de courbure tel que cela est proposé au paragraphe § 2.4.2, on peut ensuite utiliser les équations du système (70) pour obtenir, à une constante près qu'il sera toujours possible d'ajuster, la valeur absolue de la déflexion $z_i$ en chacun des points de mesure où sont situés les capteurs.

Comme dans le cas précédent, la précision de la mesure repose essentiellement sur la pertinence de la formulation de la fonction **f**.

### 3. Exemple de dimensionnement de dispositif pour fil de contact

Le dimensionnement du dispositif, compte tenu de la difficulté de calculer un rayon de courbure réaliste à l'aide de la solution de l'équation de propagation des ondes de D'Alembert, s'appuie plutôt sur une approximation géométrique simple où le fil de contact se déforme linéairement par segments.

### 3.1 Contraintes de dimensionnement

Il s'agit de dimensionner un capteur type, pouvant fonctionner sur une ligne de contact cuivrée, dont la résolution est suffisante (typiquement le demi *cm*), et peu sensible aux variations de température.

### 3.1.1 Contraintes métrologiques

Dans ce cas, compte tenu de la très faible valeur des déformations à mesurer, on s'appuiera sur un dispositif à amplification de déformations tel que celui représenté sur les figures 3, ou 12A.

Les contraintes typiques sont les suivantes :

- un déplacement vertical de la ligne de contact **H** de l'ordre de 20 *cm*,

- une résolution de mesure $\delta\varepsilon$ du système pour capteurs à fibres optiques à réseaux de Bragg de l'ordre du $\mu m/m$,
- une résolution de mesure en déplacement vertical $\delta H$ souhaitée égale ou meilleure que le demi *cm*,
- une erreur relative $\varepsilon_{max}$ sur la mesure de la déformation inférieure à 2%.

Les équations régissant le problème, compte tenu de l'approximation de la déformation en segments du fil de contact (figure 13), et par application du théorème de Pythagore, on obtient :

- la déformation en flexion $\Delta\varepsilon_{\theta\theta}$ mesurée à la distance *h* de la fibre neutre approximée selon :

$$\Delta\varepsilon_{\theta\theta} \cong \frac{4hH}{4H^2 + d^2} \tag{78}$$

qui est amplifiée sur le dispositif d'un facteur *L/D* pour donner :

$$\Delta\varepsilon_{\theta\theta\,L/D} = \frac{L}{D}\frac{4hH}{4H^2 + d^2} \tag{79}$$

- une erreur de mesure relative $\varepsilon(\Delta\varepsilon)$ approximée selon :

$$\varepsilon(\Delta\varepsilon) \cong \frac{e}{h + \left(H + \dfrac{d^2}{4H}\right)\dfrac{H^2}{d^2}} \tag{80}$$

A supposer que la conversion entre la déflexion et la déformation mesurée soit linéaire [2] on doit donc satisfaire les relations suivantes :

$$\begin{cases} d = 65\ m & \text{distance entre 2 poteaux} \\ H = 20\ cm & \text{déflexion typique} \\ \delta H = 5\ mm & \text{résolution en déflexion typique} \\ \delta\varepsilon = 1\mu m/m & \text{résolution de mesure spectrale en déformation} \\ \varepsilon_{max} = 2\% & \text{erreur de mesure relative maximale acceptée} \\ e = 1.5\ mm & \text{erreur de localisation du plan de fibre neutre} \end{cases} \qquad \text{et :} \quad \begin{cases} \left|\dfrac{\delta H}{H}\Delta\varepsilon_{\theta\theta L/D}\right| \geq \delta\varepsilon \\ |\varepsilon(\Delta\varepsilon)| \leq \varepsilon_{max} \end{cases} \tag{81}$$

soit écrit sous forme développée :

$$\begin{cases} \left|\dfrac{\delta H}{H}\dfrac{L}{D}\dfrac{4hH}{4H^2+d^2}\right| \geq \delta\varepsilon \\ \left|\dfrac{e}{h+\left(H+\dfrac{d^2}{4H}\right)\dfrac{H^2}{d^2}}\right| \leq \varepsilon_{max} \end{cases} \Leftrightarrow \begin{cases} |h|\dfrac{L}{D} \geq \dfrac{H}{\delta H}\dfrac{4H^2+d^2}{4H}\delta\varepsilon \\ h \geq \dfrac{e}{\varepsilon_{max}} - \left(H+\dfrac{d^2}{4H}\right)\dfrac{H^2}{d^2} \\ h \leq -\dfrac{e}{\varepsilon_{max}} - \left(H+\dfrac{d^2}{4H}\right)\dfrac{H^2}{d^2} \end{cases} \tag{82}$$

[2] Ce qui n'est en réalité pas le cas, mais on pourra s'en contenter en première approche pour dimensionner un dispositif.

Le dimensionnement de notre dispositif, en prenant des valeurs numériques classiques pour notre application, conduit ainsi dans un premier temps à :

$$\begin{cases} |h|\dfrac{L}{D} \geq 21\ cm \\[4pt] \begin{cases} h \geq 2.5\ cm \\ ou\ bien \\ \end{cases} \\ h \leq -12.5\ cm \end{cases} \tag{83}$$

ce qui exclut d'emblée, compte tenu de la dimension du fil (de diamètre 12 mm dans cet exemple) de positionner les capteurs à sa surface.

D'autre part, la déformation en flexion pure $\Delta\varepsilon_{\theta\theta}$ étant proportionnelle à la distance à la fibre neutre, il existe sans doute une contrainte supplémentaire, liée elle aussi à la résolution en déformations $\delta\varepsilon$ des appareils de mesure pour capteurs à fibres optiques à réseaux de Bragg, telle qu'il soit nécessaire de respecter un écartement minimal entre deux réseaux de Bragg appartenant à un même plan de mesure, pour que leurs mesures puissent être discriminées.

Cette contrainte pourrait par exemple s'écrire, les indices *i* et *j* étant chacun relatifs à un capteur appartenant au même plan :

$$\left|\frac{h_i - h_j}{R_{\min}}\right|\frac{\delta H}{H} \geq \delta\varepsilon \quad\Leftrightarrow\quad \boxed{\left|h_i - h_j\right| \geq R_{\min}\frac{H}{\delta H}\delta\varepsilon} \tag{84}$$

soit dans le cadre de l'approximation développée ici :

$$\left|h_i - h_j\right| \geq \left(\frac{H}{2} + \frac{d^2}{8H}\right)\frac{H}{\delta H}\delta\varepsilon \tag{85}$$

dont l'application numérique dans le cadre de notre exemple conduit à :

$$\left|h_i - h_j\right| \geq 2.64\ cm \tag{86}$$

### 3.1.2 Contraintes d'ordre thermique

Les problèmes induits par les variations de température sont de deux ordres :

- celles-ci ont une influence sur la longueur d'onde de Bragg au travers :

  - de l'indice de réfraction qui est sensible aux variations de température,
  - de la dilatation thermique de la fibre elle-même dont la longueur va changer avec la température,

- elles font varier les dimensions du dispositif et du fil de contact, engendrant de ce fait des contraintes mécaniques.

Même si dans les faits les variations dimensionnelles du dispositif n'ont que peu d'influence sur la mesure de la flexion puisqu'elle est le résultat de la *différence* de deux mesures de déformations (les déformations d'origine thermique disparaissant dans cette opération), il peut être néanmoins utile d'atténuer leur influence de façon à ce que les fibres ne rencontrent, sous l'effet de fortes variations de température, de déformations trop importantes conduisant à leur rupture prématurée.

Dans ce cas, on sera amené à équilibrer les variations de longueur d'origine thermique selon l'équation :

$$\boxed{\sum_{i=1}^{n} \alpha_i L_i = 0} \quad \text{où} \begin{cases} \alpha_i \\ L_i \end{cases} \quad \text{est le coefficient thermique de l'élément } i \\ \quad \text{est la longueur de l'élément dans la chaîne de cotes} \qquad (87)$$

Ainsi, pour dimensionner le dispositif et avec les notations de la figure 3, il faut tenir compte des contraintes suivantes :

$$\alpha_{Cu}L = \alpha_{Al}(L-D) + \alpha_{fibre}D \quad \Leftrightarrow \quad \frac{L}{D} = \frac{\alpha_{Al} - \alpha_{fibre}}{\alpha_{Al} - \alpha_{Cu}} \qquad (88)$$

formule dont l'application numérique donne :

$$\begin{cases} \alpha_{Cu} = 16.5 \times 10^{-6} \ K^{-1} & \text{matériau cuivre pour le fil caténaire} \\ \alpha_{Al} = 23.1 \times 10^{-6} \ K^{-1} & \text{matériau aluminium pour le dispositif} \quad \Rightarrow \frac{L}{D} = 3.42 \qquad (89) \\ \alpha_{fibre} = 0.5 \times 10^{-6} \ K^{-1} & \text{matériau silice pour la fibre optique} \end{cases}$$

que l'on pourra comparer aux contraintes métrologiques fournies par l'application numérique (83) qui impose un ratio

$$|h|\frac{L}{D} \geq 21 \ cm.$$

On choisira par exemple de positionner les réseaux de Bragg à une distance minimale de 6 *cm* de la fibre neutre, au dessus du fil de contact, et à amplifier leur déformation d'un facteur proche de 3.42 pour limiter les effets mécaniques induits par les variations de température.

Compte tenu du fait que le fil de contact a un diamètre $\varnothing$ = 12 *mm*, les réseaux de Bragg seront donc positionnés en dehors de la section physique du fil tel que cela est représenté par exemple sur les figures 1A et 1B pour un fil de contact de diamètre $\varnothing$ = 12 *mm*.

Concernant la dimension **D**, on la choisira égale à 1 *cm* de façon à pouvoir installer confortablement les réseaux de Bragg :

$$D = 1 \ cm \qquad (90)$$

### 3.2 Nombre minimal de réseaux de Bragg à utiliser

La contrainte principale concernant les mesures est qu'il est nécessaire de disposer de mesures dans deux plans d'orientations distinctes.

On pourra donc se contenter de n'utiliser que trois réseaux de Bragg pour faire les mesures, pourvu que deux à deux, ils se trouvent dans des plans de mesure distincts, autrement dit il ne faut pas que les trois réseaux de Bragg se trouvent dans un même plan.

### 3.3 Mesure des cotes $h_i$ et $d_i$, et erreur de positionnement e

Les principales contraintes pour utiliser les formules dans le dimensionnement du dispositif est d'obtenir les distances $h_i$ et $d_i$ de façon suffisamment précise, et savoir comment positionner le plan de fibre neutre.

Il faut tout d'abord noter que les capteurs doivent tous se trouver dans la même section perpendiculaire à l'axe du profilé.

### 3.3.1 Les distances $h_i$

Ainsi, tel que cela peut se comprendre à partir de la figure 8 les distances $h_i$ correspondent, *dans un plan perpendiculaire au plan de fibre neutre*, à la distance entre la fibre neutre et le capteur.

### 3.3.2 Les distances $d_i$

De même, à partir de la figure 6A, les distances $d_i$ correspondent, *dans un plan désorienté par rapport au plan de fibre neutre*, à la distance entre la fibre neutre et le capteur, et si θ est l'angle formé entre le plan de mesure et la normale au plan de fibre neutre, on a la correspondance :

$$h_i = d_i \cos\theta \tag{91}$$

En général, on connaît les distances $d_i$, car elles sont mesurables directement sur le dispositif si on sait par avance où se situe le plan de fibre neutre.

### 3.3.3 Localisation du plan de fibre neutre, origine des distances $h_i$ et $d_i$, et erreur de positionnement $e$

Toutes les origines des distances sont prises par rapport au plan de fibre neutre *en flexion pure* dont la position $z_0$ est donnée par l'équation (49), et rappelée ici :

$$\iint\limits_{z \in S} (z - z_0)\, dS = 0 \tag{92}$$

avec un axe $\vec{z}$ normal au plan de fibre neutre en *flexion pure*

Si la section du profilé est de symétrie circulaire, alors, quelle que soit la direction des efforts de *flexion pure* appliqués sur celui-ci, tous les plans passeront par un même point commun ; les distances $h_i$ et $d_i$ seront alors prises par rapport au plan de fibre neutre moyen[3] passant par ce point.

[3] C'est à dire : le plan de fibre neutre généré par les efforts de flexion pure exercés dans la direction la plus souvent rencontrée au cours du temps, soit pour un pantographe au contact de sa ligne caténaire : la direction verticale (du bas vers le haut).

De la même façon, si la direction des efforts est constante - que la section du profilé soit de symétrie circulaire ou non -, alors la courbure du profilé se fera toujours dans un même plan, et la position du plan de fibre neutre en *flexion pure* pourra être connue par avance ; les distances $h_i$ et $d_i$ seront donc celles calculées par rapport à ce plan unique de fibre neutre en *flexion pure.*

Si par contre, cette symétrie est rompue, il est alors possible de définir, quelle que soit la direction des efforts de *flexion pure* appliqués au profilé, une zone commune de surface non nulle par où passent tous les plans de fibre neutre dont on pourra définir une dimension caractéristique, assimilable à une erreur de localisation $e$ telle que définie par l'équation (55), selon :

$$e = \sqrt{\frac{S}{\pi}} \tag{93}$$

où les contours de la surface $S$ sont définis par l'enveloppe de tous les plans de fibre neutre *en flexion pure* calculés à partir de l'équation (92) pour toutes les directions $\vec{z}$ de la section étudiée en question (figure 11).

**ANNEXE 2**

**1 Paramètres caractéristiques définissant la position du plan de fibre neutre**

**1.1 Hypothèses simplificatrices et principes de base de la résistance des matériaux**

Dans le cadre de la résistance des matériaux où les déformations restent faibles, il est fait appel aux hypothèses suivantes [Goulet and Boutin, 1998] :

1. les déformations du corps sont supposées très petites et sans influence sur l'intensité et la direction des forces appliquées, et sur les conditions d'équilibre du corps (sauf notamment dans l'étude des corps sur appuis élastiques et dans l'étude du flambement),

2. entre deux sections voisines d'une pièce prismatique, les variations de forme et d'étendue de section sont supposées être très progressives,

3. la section droite (perpendiculaire à la fibre moyenne) d'une pièce prismatique reste plane après l'application des forces sur la pièce ; c'est l'hypothèse de Navier-Bernoulli,

4. dans le domaine de l'élasticité de la matière, les déformations sont proportionnelles aux contraintes ; c'est la loi de Hooke,

5. la généralisation de la loi de Hooke conduit au principe de superposition des effets des forces, selon lequel l'effet produit par un ensemble de forces est égal à la somme des effets produits par chaque force considérée isolément,

6. les contraintes, et par suite les déformations, dans une région éloignée des points d'application d'un système de forces, ne dépendent que de la résultante générale et du moment résultant de ce système de forces ; c'est le principe énoncé par Saint-Venant.

En particulier, l'hypothèse (3) de Navier-Bernoulli, associée aux autres hypothèses, permet d'affirmer que le lieu où les déformations mécaniques sont nulles est plan : on appellera ce lieu le plan de fibre neutre.

**1.2 Définition de la position du plan de fibre neutre**

La définition du plan de fibre neutre commence tout d'abord par sa définition dans des conditions de sollicitations simples (de la *flexion pure* dont la direction et l'application des efforts sont connues). Sa définition dans des conditions réelles (direction des efforts inconnue et présence d'efforts combinés à de la traction ou de la compression) utilise alors les résultats établis dans des conditions simples.

**1.2.1 Conditions d'existence du plan de fibre neutre**

Le plan de fibre neutre n'existe qu'à partir du moment où le matériau est soumis à une flexion non nulle. En particulier, si le matériau n'est soumis qu'à une déformation de traction ou de compression (sans aucune flexion), le plan de fibre neutre n'existe pas.
Si le matériau est soumis à une flexion pure non nulle (pouvant être combinée à de la traction ou de la compression), alors, il existe un plan de fibre neutre, dont la position n'est pas nécessairement à l'intérieur du matériau.

**1.2.2 Paramètres influant sur la position du plan de fibre neutre**

La position de la fibre neutre dépend de nombreux paramètres :

- de la résistance mécanique du matériau, en particulier son module d'Young,
- de la forme de la section en flexion :

    - en particulier, si cette section est soumise à une usure, celle-ci aura une influence sur la position du plan de fibre neutre,

- de la direction des efforts, de leur type et de leur intensité :

- en particulier, s'il y a une combinaison d'efforts de traction ou de compression aux efforts de flexion, ils ont pour effet de modifier la position du plan de fibre neutre.

### 1.2.3 Calcul de la position du plan de fibre neutre dans le cas d'une flexion pure

Le plus simple est de définir la position de fibre neutre en absence de traction ou compression, et de décaler sa position de la valeur nécessaire en cas d'une traction ou compression additionnelle.

Dans ce cas, si $\bar{z}$ est la direction des efforts de flexion, et si on note $z_0$ la position de la fibre neutre repérée sur l'axe $\bar{z}$, on a l'égalité suivante :

(flexion pure, effort selon $\bar{z}$ et solide de section $S$) => plan de fibre neutre en $z_0$ est solution de :

$$\iint_{z \in S}\left(z - z_0\right) dS = 0 \qquad \text{(i)}$$

Si la direction des efforts change, étant donné que cette intégrale de surface dépend de l'orientation de l'axe $\bar{z}$, alors la position du plan de fibre neutre change.

Ainsi, pour un axe $\bar{z}'$ correspondant à une direction d'efforts différente, le plan de fibre neutre en *flexion pure* sera différent (figure 11), mais toujours perpendiculaire à la projection de la direction des efforts dans le plan de la section étudiée (tel que défini par l'équation (i)).

Pour tout un ensemble d'efforts dont les directions changent au cours du temps, on obtient ainsi tout un faisceau de plans de fibre neutre dont leur intersection n'est pas nécessairement commune, en particulier si le solide en question n'a pas de symétrie de révolution, entraînant ainsi, si la direction des efforts est a priori inconnue, une incertitude de positionnement notée *e* du plan de fibre neutre (figure 11).

Cette incertitude *e* est quasiment impossible à déterminer en conditions réelles, car très souvent, soit la direction des efforts, soit la géométrie de la section n'est pas connue avec suffisamment de précision (parfois les deux en même temps), ce qui ne permet pas, dans un repère fixe par rapport au solide étudié, de définir une position précise des plans de fibre neutre.

Dans le pire des cas, seule une valeur maximale de cette incertitude *e* peut être estimée. La difficulté consiste alors à concevoir un dispositif le moins sensible à cette incertitude.

### 1.2.4 Calcul de la position du plan de fibre neutre dans le cas d'une traction ou compression additionnelle

Comme cela a déjà été démontré par ailleurs (annexe 1, § 2), une traction ou compression additionnelle dont la résultante est la déformation $\Delta\varepsilon_{xx}$ a pour influence de déplacer la position du plan de fibre neutre d'une valeur $\Delta z_0$ selon la normale à la surface de contact (voir figure 8) telle que :

$$\Delta z_0 = -R\Delta\varepsilon_{xx} \qquad \text{(ii)}$$

où **R** est le rayon de courbure en flexion pure et $\Delta\varepsilon_{xx}$ la déformation de traction ou compression.

Compte tenu de la formule (2), le plan de fibre neutre, dans le cadre d'une combinaison d'efforts de flexion, et de traction ou de compression, peut se trouver en dehors du solide si la grandeur $\Delta z_0$ est par exemple plus grande que le plus grand diamètre de la section **S** étudiée.

### 2 Importance de la position du plan de fibre neutre pour la détermination de la flexion d'un profilé

La position du plan de fibre neutre, même si sa valeur exacte reste inconnue, est cependant nécessaire pour le calcul des déformations de flexion, car elle fait intervenir dans ses termes une distance *h* par rapport à ce plan de fibre neutre.

On travaille alors avec une distance géométrique *p* = *h* + **e** déterminée une fois le dispositif monté sur le profilé à caractériser (celui-ci étant immobile par rapport à la section **S**), entachée d'une erreur systématique *e* que l'on ne connaît pas mais que l'on peut majorer.

C'est la valeur d'erreur relative des mesures de déformations $\varepsilon(\Delta\varepsilon)$ qu'il s'agit alors de minimiser pour une majoration d'erreurs qu'il est possible de connaître par avance.

**2.1 Incertitude e de position du plan de fibre neutre et erreurs de mesure absolues $E(\Delta\varepsilon)$ et relatives $\varepsilon(\Delta\varepsilon)$**

Compte tenu de l'incertitude e de la position du plan de fibre neutre du fait que :

- la direction des efforts n'est pas toujours connue,
- la géométrie de la section n'est pas connue avec précision (usure du fil de contact par exemple) ; la valeur de la déformation de flexion $\Delta\varepsilon_{\theta\theta}$ donnée par:

$$\Delta\varepsilon_{\theta\theta} = \frac{h}{R} \qquad\qquad \text{(iii)}$$

où $R$ est le rayon de courbure en flexion pure et $h$ la distance au plan de fibre neutre, est dans tous les cas entachée d'une erreur caractérisée par :

$$\left|\begin{array}{l} \text{une erreur absolue } E(\Delta\varepsilon): \ E(\Delta\varepsilon) \ = \dfrac{e}{R} \\[3mm] \text{une erreur relative } \mathcal{E}(\Delta\varepsilon): \mathcal{E}(\Delta\varepsilon) = \dfrac{e}{h + R\Delta\varepsilon_{xx}} \end{array}\right. \qquad\qquad \text{(iv)}$$

où $p = h + e$ est la position des points de mesure prise en compte dans le calcul des déformations.

**2.2 Paramètres influant sur la position du plan de fibre neutre et quelques ordres de grandeur**

Suivant la valeur de la distance $h$ par rapport au plan de fibre neutre, les erreurs relatives $\varepsilon(\Delta\varepsilon)$ peuvent donc très rapidement devenir significatives, en particulier :

1. si les dimensions du profilé sont faibles (de l'ordre du centimètre de diamètre par exemple) avec des points de mesure (là où sont positionnés les réseaux de Bragg dans le cadre de l'application décrite) à faible distance du plan de fibre neutre (là aussi typiquement de l'ordre du centimètre par exemple),

2. si la géométrie du profilé change au cours du temps (à cause d'une usure par exemple) de façon suffisante pour que la position $z_0$ du plan de fibre neutre en *flexion pure* et dans un repère fixe, définie par l'équation (i), change de façon significative,

3. s'il y a une combinaison d'efforts de flexion pure avec de la traction ou de la compression (définie par sa déformation $\Delta\varepsilon_{xx}$), entraînant un déplacement $\Delta z_0$ du plan de fibre neutre défini par l'équation (ii) pouvant là aussi devenir significatif.

**2.2.1 Cas de réseaux de Bragg collés au fil de contact**

Ainsi, si on positionne les réseaux de Bragg au contact du plan de fibre neutre, sur un fil de contact de diamètre typique 12 *mm*, les erreurs de mesures dues à la seule usure du fil, compte tenu d'une position de plan de fibre neutre qui dérive de 1.8 *mm* entre un fil neuf et un fil usé, les erreurs induites sur la mesure seront typiquement de l'ordre de :

$$\text{erreurs relatives de mesure au contact du fil dues à sa seule usure} \quad \mathcal{E}(\Delta\varepsilon) = \frac{1.8}{6} = 30\% \qquad \text{(v)}$$

**2.2.2 Cas de réseaux de Bragg positionnés à grande distance du fil de contact**

Si on positionne les réseaux de Bragg loin du plan de la fibre neutre, typiquement à 30 mm, on diminuera les erreurs relatives d'autant.

$$\text{erreurs relatives de mesure à distance - 30 } mm \text{ -} \atop \text{du fil dues à sa seule usure} \qquad : \qquad \mathcal{E}(\Delta\varepsilon) = \frac{1.8}{36} = 4.4\% \qquad (vi)$$

Cette erreur peut encore être diminuée en utilisant un dispositif amplificateur de déformations en ramenant la longueur de base **L** de mesure des déformations à une longueur plus courte **D** de sorte à fournir un facteur amplificateur égal au quotient ρ **= L/D ≥ 1.**

Ainsi pour un rapport d'amplification égal à p = 3.42, on atteint un niveau d'erreurs typique égal à :

$$\text{erreurs relatives de mesure à distance - 30 } mm \text{ -} \atop \text{du fil dues à sa seule usure avec dispositif amplificateur} \qquad : \qquad \mathcal{E}(\Delta\varepsilon) = \frac{1.8}{36*3.42} = 1.5\% \qquad (vii)$$

**REFERENCES**

**[Bosselmann *et al.*, 2004]** Bosselmann, T., Hertsch, H., Kaiser, J., Puschmann, R., Theune, N.-M., and Willsch, M. (2004). Patent : " *Optisches Verfahren und optische Einrichtung zur Überwachung eines elektrischen Leiters* ". Patent number : EP 1 496 369.

**[Goulet and Boutin, 1998]** Goulet, J. and Boutin, J.-P. (1998). "Résistance des matériaux ". Dunod, Paris, France, 8ième édition.

**[Kießling *et al.*, 2001]** Kießling, F., Puschmann, R., and Schmieder, A. (2001). " Contact lines for electric railways, planning, design, implementation ". Publicis Corporate Publishing, Munich Erlangen.

**[Magne and Ferdinand, 2005]** Magne, S. and Ferdinand, P. (2005). Patent : "*System for the distributed measurement of structural bending* ". Patent number : WO 2005/088375 A1.

**[Rougeault, 2004]** Rougeault S. (2004). Patent : " *Extensometer comprising a flexible sensing element and Bragg gratings* ". Patent number: WO 2004/070314 A1.

**Revendications**

**1.** Dispositif de mesure de déformations mécaniques de flexion et de traction/compression (3, 31) d'un profilé (1) soumis à un ou plusieurs efforts, comprenant au moins trois capteurs à fibre optique à réseaux de Bragg, lesdits capteurs s'étendant parallèlement à l'axe longitudinal du profilé dans un plan $(P_k)_{(k\geq0)}$ et entre deux supports (5a, 5b, 41 a, 41 b) accrochés en deux points du profilé au moins deux de ces capteurs étant par ailleurs disposés à des distances distinctes du profilé, et les trois capteurs étant parallèles mais non disposés dans un même plan **caractérisé en ce que**, le profilé formant ligne de contact d'alimentation électrique d'un train, les capteurs sont disposés à distance et le plus loin possible du plan de fibre neutre du profilé par l'intermédiaire desdits supports (5a, 5b, 41a, 41 b) qui s'étendent à partir du profilé

**2.** Dispositif selon la revendication précédente, **caractérisé en ce que** les capteurs à fibre optique à réseaux de Bragg sont disposés par paires, symétriquement de part et d'autre d'un plan de symétrie du dispositif passant par l'axe longitudinal du profilé (1).

**3.** Dispositif selon l'une des revendications précédentes, **caractérisé en ce qu'**il comprend au moins un capteur à fibre optique à réseaux de Bragg pour déterminer une compensation thermique à apporter aux mesures effectuées.

**4.** Dispositif support pour un dispositif de mesure selon l'une des revendications précédentes, **caractérisé en ce qu'**il comporte au moins une paire de bras en V (4a, 4b) s'étendant à partir du profilé, les segments de fibres optiques sur lesquels sont inscrits les capteurs à réseaux de Bragg étant destinés à s'étendre entre les bras se faisant face selon la direction longitudinale du profilé.

**5.** Dispositif support selon la revendication 4, **caractérisé en ce que** des bras se faisant face comportent des portées qui les rapprochent et réduisent la longueur des segments de fibres optiques comportant les réseaux de Bragg entre lesdits bras.

**6.** Dispositif support pour un dispositif de mesure selon l'une des revendications 1 à 5, **caractérisé en ce qu'**il comprend au moins deux supports (51 a, 51 b), la fibre optique sur laquelle sont inscrits les réseaux de Bragg étant destinée à s'enrouler autour de ces supports de sorte que les capteurs à réseaux de Bragg s'étendent entre les supports selon la direction longitudinale du profilé.

**7.** Dispositif support selon la revendication 6, **caractérisé en ce que** les supports comprennent des rainures (520a, 520b) destinées à recevoir la fibre optique (71).

**8.** Dispositif support selon l'une des revendications 6 ou 7, **caractérisé en ce que** les supports présentent des extrémités (511a, 511 b) arrondies.

**9.** Dispositif selon l'une des revendications précédentes, **caractérisé en ce qu'**il comporte des moyens amovibles pour ajuster la pré-tension de la fibre optique à réseau de Bragg entre les supports.

**10.** Dispositif selon l'une des revendications précédentes, **caractérisé en ce qu'**il comprend des moyens de fixation à la ligne de contact d'alimentation électrique d'un train.

**11.** Dispositif selon l'une des revendications précédentes, **caractérisé en ce qu'**il comprend une pluralité de dispositifs (3, 31) selon l'une des revendications précédentes, disposés en série sur le profilé.

**12.** Dispositif selon l'une des revendications précédentes, **caractérisé en ce qu'**il comporte des moyens de traitement (10) pour calculer, à partir des mesures des déformations issues des capteurs à fibre optique à réseaux de Bragg, l'une au moins des valeurs parmi une valeur du rayon de courbure local du profilé, une valeur de la déformation de traction / compression du profilé, une valeur de l'effort appliqué au profilé.

**13.** Procédé de traitement de mesures des déformations mécaniques de traction / compression et des déformations de flexion d'un profilé, soumis à un ou plusieurs efforts effectué par un dispositif de mesure (3, 31) selon l'une des revendications précédentes, selon lequel on transmet dans une ou plusieurs fibres optiques un signal lumineux et on traite le signal issu de la ou de chaque fibre pour déterminer les longueurs de Bragg de la ou des fibres et en déduire une mesure des déformations mécaniques du profilé, **caractérisé en ce que** le dispositif de mesure comportant au moins deux capteurs référencés $i$ et $j$, inclus dans un même plan (P) et à des distances respectives $d_i$ et $d_j$ mésurées dans le plan (P) du plan de fibre neutre du profilé **caractérisé en ce qu'**on calcule, à partir des mesures des déformations $\Delta\varepsilon_i$ et $\Delta\varepsilon_j$ des capteurs (i, j) respectifs, une valeur de la déformation en traction / compression $\Delta\varepsilon_{xxij}$ du profilé pour les capteurs (i, j) selon la formule :

$$\forall \{i,j\}\,(i \neq j)\quad \boxed{\Delta\varepsilon_{xx_{ij}} = \frac{d_i\Delta\varepsilon_j - d_j\Delta\varepsilon_i}{d_i - d_j}}.$$

**14.** Procédé selon la revendication 13, selon lequel on calcule les efforts de traction / compression et de flexion subis par le profilé, sur la base des mesures de déformations de traction / compression et de déformation de flexion du profilé.

**15.** Procédé selon l'une des revendications 13 à 14, le dispositif de mesure comportant au moins deux capteurs référencés $i$ et $j$ respectivement, inclus dans un même plan (P) et distants l'un de l'autre d'une distance $(d_i - d_j)$ dans le plan (P), le plan (P) étant par ailleurs incliné d'un angle $\theta$ par rapport au plan $(P_0)$ contenant la direction longitudinale du profilé et celle de l'effort appliqué, **caractérisé en ce qu'**on calcule, à partir des mesures des déformations $\Delta\varepsilon_i$ et $\Delta\varepsilon_j$ des capteurs (i, j) respectifs, une valeur du rayon de courbure $R_{ij}$ pour les capteurs (i, j) par la formule :

$$\forall \{i, j\}\, (i \neq j) \quad \boxed{R_{ij} = \frac{d_i - d_j}{\Delta\varepsilon_i - \Delta\varepsilon_j} \cos \langle\theta\rangle}$$

ce rayon de courbure $R_{ij}$ définissant localement la flexion du profilé.

**16.** Procédé selon l'une des revendications 16 à 15, le dispositif de mesure comportant au moins deux capteurs référencés $i$ et $j$, inclus dans un plan ($P_k$), et deux capteurs référencés $p$ et $q$, inclus dans un plan ($P_l$), l'angle entre les plans ($P_k$) et ($P_l$) étant $\alpha_{kl}$, les capteurs (i , j) fournissant les mesures de déformations respectives ($\Delta\varepsilon_{ik}$, $\Delta\varepsilon_{jk}$) et étant à des distances respectives ($d_{ik}$, $d_{jk}$) du plan de fibre neutre du profilé mesurées dans le plan ($P_k$), les capteurs (p , q) fournissant les mesures de déformations respectives ($\Delta\varepsilon_{pl}$, $\Delta\varepsilon_{ql}$) et étant à des distances respectives ($d_{pl}$, $d_{ql}$) du plan de fibre neutre du profilé mesurées dans le plan ($P_l$), **caractérisé en ce qu'**on calcule la position angulaire $\theta_{kl/ijpq}$ , prise dans un plan perpendiculaire à l'axe longitudinal du profilé, de l'application des efforts de contact par rapport au plan ($P_k$) et pour les capteurs (i, j, p, q) selon la formule :

$$\begin{cases} \forall \{i, j\}\ (i \neq j) \\ \forall \{p, q\}\ (p \neq q) \\ \forall \{k, l\}\ (k \neq l) \end{cases} \theta_{kl_{ijpq}} = \arctan\left[ \frac{1}{\sin\alpha_{kl}} \left( \frac{\dfrac{d_{i_k} - d_{j_k}}{\Delta\varepsilon_{i_k} - \Delta\varepsilon_{j_k}}}{\dfrac{d_{p_l} - d_{q_l}}{\Delta\varepsilon_{p_l} - \Delta\varepsilon_{q_l}}} - \cos\alpha_{kl} \right) \right]$$

**17.** Procédé selon la revendication 16, selon lequel on calcule, au point d'application sur le profilé d'un effort normal $F_N$ au profilé et situé dans un plan perpendiculaire à l'axe longitudinal du profilé, un ratio des composantes horizontale $F_h$ et verticale $F_v$ de cet effort normal $F_N$, selon la formule :

$$\boxed{\frac{F_v}{F_h} = \tan\varphi}$$

où $\varphi$ est, dans un plan perpendiculaire à l'axe du profilé, l'angle entre la position horizontale et la direction d'application de l'effort $F_N$, et est déduit de la connaissance d'au moins une position angulaire $\theta_k$ d'un plan ($P_k$)$_{k\geq 0}$.

**18.** Procédé selon l'une des revendications 13 à 17, **caractérisé en ce qu'**on détermine à partir d'une série de dispositifs (3, 31) conformes à l'une des revendications 1 à 12 et disposés le long d'un profilé (1), les déformations de traction / compression et les rayons de courbure locaux au niveau de chaque dispositif sur la base des mesures de déformations de traction / compression et de déformation de flexion du profilé, dont on déduit une valeur des forces de contact et de tension du profilé au cours du temps et en chaque point de la section instrumentée.

**19.** Procédé selon la revendication 18, **caractérisé en ce qu'**on déduit, à l'aide d'un modèle de comportement dynamique du profilé, une valeur de la déflexion absolue du profilé au cours du temps et en chaque point de la section instrumentée.

**Claims**

**1.** A device for measuring mechanical flexural and traction/compression deformations (3, 31) of a profile (1) subject to one or several forces, comprising at least three optical fiber Bragg grating sensors, said sensors extending parallel to the longitudinal axis of the profile in a plane ($P_k$)$_{(k\geq 0)}$ and between two supports (5a, 5b, 41a, 41b) attached to two points of the profile, at least two of the sensors being moreover positioned at distinct distances from the profile, and the three sensors being parallel but not positioned in a same plane, **characterized in that**, the profile forming an electric power supply contact line of a train, the sensors are positioned at a distance and as far as possible from the neutral fiber plane of the profile via said supports (5a, 5b, 41a, 41b), which extend from the profile.

2. The device according to the preceding claim, **characterized in that** the optical fiber Bragg grating sensors are positioned pairwise symmetrically on either side of a plane of symmetry of the device passing through the longitudinal axis of the profile (1).

3. The device according to one of the preceding claims, **characterized in that** it comprises at least one optical fiber Bragg grating sensor for determining a thermal compensation to be applied to the conducted measurements.

4. A supporting device for a measurement device according to one of the preceding claims, **characterized in that** it includes at least one pair of V-shaped arms (4a, 4b) extending from the profile, the segments of optical fibers on which are inscribed the Bragg grating sensors, being intended to extend between the arms facing each other along the longitudinal direction of the profile.

5. The supporting device according to claim 4, **characterized in that** arms facing each other include spans which brings them closer together and reduces the length of the segments of optical fibers including the Bragg gratings between said arms.

6. A supporting device for a measurement device according to one of claims 1 to 5, **characterized in that** it comprises at least two supports (51a, 51b), the optical fiber on which are inscribed the Bragg gratings being intended to be wound around these supports, so that the Bragg grating sensors extend between the supports along the longitudinal direction of the profile.

7. The supporting device according to claim 6, **characterized in that** the supports comprise grooves (520a, 520b) intended to receive the optical fiber (71).

8. The supporting device according to one of claims 6 or 7, **characterized in that** the supports have rounded ends (511a, 511b).

9. The device according to one of the preceding claims, **characterized in that** it includes a removable means in order to adjust the pre-tension of the Bragg grating optical fiber between the supports.

10. The device according to one of the preceding claims, **characterized in that** it comprises means for attachment to the electric power supply contact line of a train.

11. The device according to one of the preceding claims, **characterized in that** it comprises a plurality of devices (3, 31) according to one of the preceding claims, positioned in series on the profile.

12. The device according to one of the preceding claims, **characterized in that** it includes processing means (10) for calculating from measurements of the deformations from optical fiber Bragg grating sensors, at least one of the values from a value of the local radius of curvature of the profile, a value of the traction/compression deformation of the profile, a value of the force applied to the profile.

13. A method for processing measurements of mechanical traction/compression deformations and flexural deformations of a profile, subject to one or several forces carried out by a measurement device (3, 31) according to one of the preceding claims, according to which a light signal is transmitted in one or several optical fibers and the signal from said or each fiber is processed for determining the Bragg lengths of the fiber(s), and for inferring therefrom a measurement of the mechanical deformations of the profile, **characterized in that** the measurement device including at least two sensors referenced as *i* and *j*, included in a same plane (P) and at respective distances $d_i$ and $d_j$ measured in the plane (P) of the neutral fiber plane of the profile, **characterized in that**, from the measurements of the deformations $\Delta\varepsilon_i$ and $\Delta\varepsilon_j$ of the respective sensors (i, j), a value of the traction/compression deformation $\Delta\varepsilon_{xxij}$ of the profile for the sensors (i, j) is calculated according to the formula:

$$\forall\{i, j\}(i \neq j) \quad \Delta\varepsilon_{xx_{ij}} = \frac{d_i\Delta\varepsilon_j - d_j\Delta\varepsilon_i}{d_i - d_j}$$

14. The method according to claim 13, according to which the traction/compression and flexural forces to which the profile is subject, are calculated on the basis of the measurements of traction/compression deformations and flexural deformation of the profile.

15. The method according to one of claims 13 to 14, the measurement device including at least two sensors referenced as $i$ and $j$ respectively, included in a same plane (P) and distant from each other by a distance ($d_i$-$d_j$) in the plane (P), the plane (P) being moreover tilted by an angle θ relatively to the plane (P$_0$) containing the longitudinal direction of the profile and that of the applied force, **characterized in that** from the measurements of the deformations $\Delta\varepsilon_i$ and $\Delta\varepsilon_j$ of the respective sensors (i, j), a value of the radius of curvature R$_{ij}$ for the sensors (i, j) is calculated by the formula:

$$\forall\{i,j\}(i \neq j) \quad R_{ij} = \frac{d_i - d_j}{\Delta\varepsilon_i - \Delta\varepsilon_j}\cos\langle\theta\rangle$$

this radius of curvature R$_{ij}$ locally defining the profile flexion.

16. The method according to one of claims 13 to 15, the measurement device including at least two sensors referenced as $i$ and $j$, included in a plane (P$_k$) and two sensors referenced as $p$ and $q$, included in a plane (P$_1$), the angle between the planes (P$_k$) and (P$_l$) being $\alpha_{kl}$, the sensors (i, j) providing measurements of respective deformations ($\Delta\varepsilon_{ik}$, $\Delta\varepsilon_{jk}$) and being at respective distances ($d_{ik}$, $d_{jk}$) from the neutral fiber plane of the profile measured in the plane (P$_k$), the sensors (p, q) providing measurements of respective deformations ($\Delta\varepsilon_{pl}$, $\Delta\varepsilon_{ql}$) and being at respective distances ($d_{pl}$, $d_{ql}$) from the neutral fiber plane of the profile measured in the plane (P$_l$), **characterized in that** the angular position $\theta_{klijpq}$ taken in a plane perpendicular to the longitudinal axis of the profile, is calculated from the application of the contact forces relatively to the plane (P$_k$) and for the sensors (i, j, p, q) according to the formula:

$$\begin{array}{l}\forall\{i,j\}i \neq j \\ \forall\{p,q\}p \neq q \\ \forall\{k,l\}k \neq l\end{array} \quad \theta_{kl_{ijpq}} = \arctan\left[\frac{1}{\sin\alpha_{kl}}\left(\frac{\dfrac{d_{i_k} - d_{j_k}}{\Delta\varepsilon_{i_k} - \Delta\varepsilon_{j_k}}}{\dfrac{d_{p_k} - d_{q_k}}{\Delta\varepsilon_{p_k} - \Delta\varepsilon_{q_k}}} - \cos\alpha_{kl}\right)\right]$$

17. The method according to claim 16, according to which, at the point of application on the profile of a normal force F$_N$ to the profile and located in a plane perpendicular to the longitudinal axis of the profile, a ratio of the horizontal F$_h$ and vertical F$_v$ components of this normal force F$_N$ is calculated according to the formula:

$$\frac{F_v}{F_h} = \tan\varphi$$

wherein φ is, in a plane perpendicular to the axis of the profile, the angle between the horizontal position and the direction of application of the force F$_N$ and, and is inferred from knowing at least one angular position $\theta_k$ of a plane (P$_k$)$_{k \geq 0}$.

18. The method according to one of claims 13 to 17, **characterized in that**, from a series of devices (3, 31) according to one of claims 1 to 12 and positioned along a profile (1), traction/compression deformations and local radii of curvature are determined at each device on the basis of measurements of traction/compression deformations and of flexural deformation of the profile, from which a value of the contact and tension forces of the profile over time and in each point of the instrumented section is inferred.

19. The method according to claim 18, **characterized in that** a value of the absolute deflection of the profile over time and in each point of the instrumented section is inferred by means of a dynamic behavior model of the profile.

**Patentansprüche**

1. Vorrichtung zur Messung mechanischer Biege-Deformationen und von Zug/Kompression (3, 31) eines Profils (1), das einer oder mehreren Belastungen unterworfen ist, umfassend zumindest drei faseroptische Sensoren mit Bragg-Gitter, wobei sich die Sensoren parallel zur Längsachse des Profils in einer Ebene $(Pk)_{(k≥0)}$ und zwischen zwei Trägern (5a, 5b, 41a, 41b) erstrecken, die an zwei Punkten des Profils befestigt sind, wobei zumindest zwei der Sensoren darüber hinaus mit unterschiedlichen Entfernungen vom Profil angeordnet sind und die drei Sensoren parallel jedoch nicht in einer selben Ebene angeordnet sind, **dadurch gekennzeichnet, dass** das Profil eine Fahrleitung zur elektrischen Versorgung eines Zugs bildet, wobei die Sensoren mit Abstand und soweit wie möglich von der Ebene der neutralen Faser des Profils mittels der Träger (5a, 5b, 41a, 41b) angeordnet sind, die sich vom Profil erstrecken.

2. Vorrichtung nach dem vorherigen Anspruch, **dadurch gekennzeichnet, dass** die faseroptischen Sensoren mit Bragg-Gitter in Paaren, symmetrisch beidseitig einer Symmetrieebene der Vorrichtung, die durch die Längsachse des Profils (1) verläuft, angeordnet sind.

3. Vorrichtung nach einen der vorherigen Ansprüche, **dadurch gekennzeichnet, dass** sie zumindest einen faseroptischen Sensor mit Bragg-Gitter umfasst, um eine thermische Kompensation zu bestimmen, die den ausgeführten Messungen hinzuzufügen ist.

4. Tragevorrichtung für eine Messvorrichtung gemäß einem der vorherigen Ansprüche, **dadurch gekennzeichnet, dass** sie zumindest ein Paar von Armen in einem V (4a, 4b) aufweist, die sich vom Profil erstrecken, wobei die Abschnitte optischer Fasern, auf welchen die Sensoren mit Bragg-Gitter eingeschrieben sind, dazu vorgesehen sind, sich zwischen den Armen zu erstrecken, die sich bezüglich der Längsrichtung des Profils gegenüber liegen.

5. Vorrichtung nach Anspruch 4, **dadurch gekennzeichnet, dass** die sich gegenüberliegenden Arme Auflageflächen aufweisen, die diese annähern und die Länge der optischen Fasersegmente, die die Bragg-Gitter aufweisen, zwischen den Armen reduzieren.

6. Tragevorrichtung für eine Messvorrichtung gemäß einem der Ansprüche 1-5, **dadurch gekennzeichnet, dass** sie zumindest zwei Träger (51a, 51b) aufweist, wobei die optische Faser auf der die Bragg-Gitter eingeschrieben sind, dafür vorgesehen ist um diese Träger gewickeltzu werden, sodass die Sensoren mit Bragg-Gitter sich zwischen den Trägern entlang der Längsrichtung des Profils erstrecken.

7. Tragevorrichtung nach Anspruch 6, **dadurch gekennzeichnet, dass** die Träger Rillen (520a, 520b) aufweisen, die dazu vorgesehen sind die optische Faser (71) aufzunehmen.

8. Vorrichtung nach einem der Ansprüche 6 oder 7, **dadurch gekennzeichnet, dass** die Träger gerundete Enden (511a, 511b) aufweisen.

9. Vorrichtung nach einem der vorherigen Ansprüche, **dadurch gekennzeichnet, dass** sie abnehmbare Mittel aufweist, um die Vorspannung der optischen Faser mit Bragg-Gitter zwischen den Trägern einzustellen.

10. Vorrichtung nach einem der vorherigen Ansprüchen, **dadurch gekennzeichnet, dass** sie Befestigungsmittel an der Fahrleitung zur Stromversorgung eines Zuges aufweist.

11. Vorrichtung nach einem der vorherigen Ansprüchen, **dadurch gekennzeichnet, dass** sie eine Mehrzahl von Vorrichtungen (3, 31) gemäß einem der vorherigen Ansprüche aufweist, die in Reihe auf dem Profil angeordnet sind.

12. Vorrichtung nach einem der vorherigen Ansprüche, **dadurch gekennzeichnet, dass** sie Bearbeitungsmittel (10) aufweist, um ausgehend von den Deformationsmessungen, die von den Sensoren mit optischer Faser mit Bragg-Gitter stammen, zumindest einen der Werte umfassend einen Wert des lokalen Krümmungsradius des Profils, einen Wert der Zug-/Kompressions-Deformation des Profils und einen Wert der auf das Profil angewandten Belastung zu berechnen.

13. Verfahren zur Bearbeitung von Messungen mechanischer Zug-/Kompressions-Deformationen und Biege-Deformationen eines Profils, das einer oder mehreren Belastungen unterworfen ist, ausgeführt durch eine Messvorrichtung (3, 31) gemäß einem der vorherigen Ansprüche, gemäß dem ein Lichtsignal in einer oder mehreren optischen Fasern übertragen wird und das von der oder jeder Faser ausgehende Signal bearbeitet wird, um die Bragg-Längen der Faser(n) zu bestimmen und um daraus ein Maß mechanischer Deformationen des Profils abzuleiten, **dadurch gekennzeichnet, dass** die Messvorrichtung zumindest zwei mit i und j bezeichnete Sensoren aufweist, die in einer selben Ebene (P) enthalten sind und mit jeweiligen Abständen $d_i$ und $d_j$, die in der Ebene (P) der Ebene der neutralen Faser des Profils gemessen sind, **dadurch gekennzeichnet, dass** ausgehend von den Messungen der Deformationen $\Delta\varepsilon_i$ und $\Delta\varepsilon_j$ der entsprechenden Detektoren (i, j) ein Wert der Zug-/Kompressions-Deformation $\Delta\varepsilon_{xxij}$ des Profils für die Sensoren (i, j) gemäß der folgenden Formel berechnet wird:

$$\forall\{i,j\}(i \neq j)\quad \boxed{\Delta\varepsilon_{xx_{ij}} = \frac{d_i\Delta\varepsilon_j - d_j\Delta\varepsilon_i}{d_i - d_j}}$$

**14.** Verfahren nach Anspruch 13, gemäß dem die Zug-/Kompressions- und BiegeBelastungen, die vom Profil erfahren werden auf der Basis von Zug-/Kompressions-Deformationen und Biege-Deformationen des Profils berechnet werden.

**15.** Verfahren nach einen der Ansprüche 13-14, wobei die Messvorrichtung zumindest zwei mit i bzw. j bezeichnete Sensoren aufweist, die in einer selben Ebene (P) enthalten sind und voneinander mit einem Abstand $(d_i\text{-}d_j)$ in der Ebene (P) beabstandet sind, wobei die Ebene (P) darüber hinaus um einen Winkel $\theta$ im Verhältnis zur Ebene $(P_0)$ geneigt ist, die die Längsrichtung des Profils und jene der ausgeübten Belastung enthält, **dadurch gekennzeichnet, dass** ausgehend von Messungen der Deformationen $\Delta\varepsilon_i$ und $\Delta\varepsilon_j$ der jeweiligen Sensoren (i, j) ein Wert des Krümmungsradius $R_{ij}$ für die Sensoren (i, j) gemäß der Formel berechnet wird:

$$\forall\{i,j\}(i \neq j)\quad \boxed{R_{ij} = \frac{d_i - d_j}{\Delta\varepsilon_i - \Delta\varepsilon_j}\cos\langle\theta\rangle}$$

wobei der Krümmungsradius $(R_{ij})$ lokal die Biegung des Profils definiert.

**16.** Verfahren nach einem der Ansprüche 16 bis 15, wobei die Messvorrichtung zumindest zwei mit i und j bezeichnete Sensoren, die in einer Ebene $(P_k)$ enthalten sind, und zwei mit p und q bezeichnete Sensoren aufweist, die in einer Ebene $(P_l)$ enthalten sind, wobei der Winkel zwischen dem Ebenen $(P_k)$ und $(P_l)$ $\alpha_{kl}$ ist, wobei die Sensoren (i,j) die entsprechenden Deformationsmessungen $(\Delta\varepsilon_{ik}, \Delta\varepsilon_{jk})$ liefern und sich bei jeweiligen Entfernungen $(d_{ik}, d_{jk})$ von der Ebene der neutralen Faser des Profils befinden, gemessen in der Ebene $(P_k)$, wobei die Sensoren (p, q) die jeweiligen Deformationsmessungen $(\Delta\varepsilon_{pl}, \Delta\varepsilon_{ql})$ liefern und sich bei jeweiligen Entfernungen $(d_{pl},d_{ql})$ von der Ebene der neutralen Faser des Profils befinden, gemessen in der Ebene $(P_1)$, **dadurch gekennzeichnet, dass** die Winkelposition $\theta_{ktijpq}$, aufgenommen in einer Ebene senkrecht zur Längsachse des Profils, der Ausübung der Kontaktbelastungen im Verhältnis zur Ebene $(P_k)$ und für die Detektoren (i,j,p,q) gemäß der Formel berechnet wird:

$$\begin{cases}\forall\{i,j\}\ (i \neq j)\\ \forall\{p,q\}\ (p \neq q)\\ \forall\{k,l\}\ (k \neq l)\end{cases} \theta_{ktijpq} = \arctan\left[\frac{1}{\sin\alpha_{kl}}\left(\frac{\dfrac{d_{ik} - d_{jk}}{\Delta\varepsilon_{ik} - \Delta\varepsilon_{jk}}}{\dfrac{d_{pl} - d_{ql}}{\Delta\varepsilon_{pl} - \Delta\varepsilon_{ql}}} - \cos\alpha_{kl}\right)\right]$$

**17.** Verfahren nach Anspruch 16, gemäß dem am Punkt der Ausübung einer normalen Belastung $F_N$ auf das Profil und in einer Ebene senkrecht zur Längsachse des Profils liegend, ein Verhältnis einer horizontalen $F_N$ und vertikalen $F_v$ Komponente dieser Normalbelastung $F_N$ gemäß der Formel berechnet wird:

$$\frac{F_v}{F_h} = \tan \varphi$$

wobei $\varphi$ in einer Ebene senkrecht zur Achse des Profils der Winkel zwischen der horizontalen Position und der Richtung der Ausübung der Belastung $F_N$ ist und aus der Kenntnis zumindest einer Winkelposition $\theta_k$ einer Ebene $(P_k)_{k \geq 0}$ abgeleitet wird.

18. Verfahren nach einem der Ansprüche 13 bis 17, **dadurch gekennzeichnet, dass** ausgehend von einer Reihe von Vorrichtungen (3, 31) gemäß einem der Ansprüche 1 bis 12 und angeordnet entlang des Profils (1) die Zug-/Kompressions-Deformationen und die lokalen Krümmungsradien hinsichtlich jeder Vorrichtung auf der Basis von Messungen von Zug-/Kompressions-Deformationen und von Biege-Deformationen des Profils berechnet werden, wovon ein Wert von Kontakt- und Zug- Kräften des Profils im Verlauf der Zeit und an jedem Punkt des protokollierten Abschnitts abgeleitet wird.

19. Verfahren nach Anspruch 18, **dadurch gekennzeichnet, dass** mit der Hilfe eines Modells des dynamischen Verhaltens des Profils ein Wert der absoluten Durchbiegung des Profils im Verlauf der Zeit und an jedem Punkt des protokollierten Abschnitts abgeleitet wird.

FIG.1A

FIG.1B

FIG.1C

FIG.2

FIG.3

FIG.4

FIG.5

FIG.6A

FIG.6B

FIG.7

FIG.8

FIG.9A

FIG.9B

Modèle de comportement dynamique

$$z(x,t) = f(F,T,\mu,l,v,x,t,...)$$

Calcul théorique des rayons de courbure

$$R = \frac{(1+z'^2)^{3/2}}{z''}$$

Mesure par réseau de N capteurs
$R(x_1,t)$
$R(x_2,t)$
$R(x_3,t)$
⋮
$R(x_N,t)$

Algorithme de résolution du système à N équations d'inconnues F et T (parmi d'autres)

$F(t)$, $T(t)$

Algorithme de calcul de la déflexion $z(x,t)$

$z(x, t)$

FIG.10

FIG.11

FIG.12A

FIG.12B

FIG.12C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1496369 A, Bosselmann
- WO 2005088375 A, Magne and Ferdinand

- EP 1635034 A
- WO 2005088375 A1
- WO 2004070314 A1

**Littérature non-brevet citée dans la description**

- **GOULET, J. ; BOUTIN, J.-P.** Résistance des matériaux. 1998

- **KIEßLING, F. ; PUSCHMANN, R. ; SCHMIEDER, A.** Contact lines for electric railways, planning, design, implementation. Publicis Corporate Publishing, 2001